# EUROPEAN PATENT SPECIFICATION

(11) **EP 3 482 541 B1**
(45) Date of publication and mention of the grant of the patent: **23.09.2026**
(21) Application number: 17740575.0
(22) Date of filing: 06.07.2017
(51) Int. Cl.: H04L 27/26, H04L 5/00

(54) **PHASE NOISE COMPENSATION**
PHASENRAUSCHKOMPENSATION
COMPENSATION DE BRUIT DE PHASE

(30) Priority: 08.07.2016 US 201662360043 P; 13.09.2016 WO PCT/CN2016/098912
(43) Date of publication of application: 15.05.2019
(73) Proprietor: Apple Inc., Cupertino, CA 95014 (US)
(72) Inventor: GUO, Yuhang, Haidian Beijing 100876 (CN); ZHANG, Yushu, Beijing 11 100190 (CN); XIONG, Gang, Portland, OR 97229 (US); ZHU, Yuan, Beijing Heilongjiang 100012 (CN); LI, Hua, Beijing 11 100086 (CN); NIKOPOUR, Hosein, San Jose, California 95124 (US); DA SILVA, Claudio, Portland, Oregon 97229 (US); LEE, Wook Bong, Pleasanton, California 94588 (US)
(74) Representative: Lang, Johannes
(86) International application number: PCT/US2017/040825
(87) International publication number: WO 2018/009608

(56) References cited:
- US-A1- 2010 074 244
- US-A1- 2011 305 185
- US-A1- 2015 030 037
- SAMSUNG: "Summary of Reflector Discussions on EUTRA UL RS", 3GPP DRAFT; R1-074766 UL RS SUMMARY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jeju, Korea; 20071105 - 20071109, 4 November 2007 (2007-11-04), XP050596574, [retrieved on 20071104]
- INTERDIGITAL COMMUNICATIONS ET AL: "Discussion on Unique Word DFT-S-OFDM Waveform for New Radio", vol. RAN WG1, no. Nanjing, China; 20160523 - 20160527, 14 May 2016 (2016-05-14), XP051089861, Retrieved from the Internet <URL:http://www.3gpp.org/ftp/tsg_ran/WG1_RL1/TSGR1_85/Docs/> [retrieved on 20160514]
- YE WU ET AL: "Two-Dimension Adaptive Spectral Efficiency for SC-FDMA Systems", VEHICULAR TECHNOLOGY CONFERENCE FALL (VTC 2010-FALL), 2010 IEEE 72ND, IEEE, PISCATAWAY, NJ, USA, 6 September 2010 (2010-09-06), pages 1 - 5, XP031770542, ISBN: 978-1-4244-3573-9
- SAMSUNG: "Data and Control Multiplexing in DFT-S-OFDM", 3GPP DRAFT; R1-051039 DATA AND CONTROL MULTIPLEXING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Diego, USA; 20051004, 4 October 2005 (2005-10-04), XP050100661, [retrieved on 20051004]
- GUO QIN ET AL: "Impacts of high mobility on post-processing SINR estimation for MIMO-OFDM transmissions", 2013 INTERNATIONAL WORKSHOP ON HIGH MOBILITY WIRELESS COMMUNICATIONS (HMWC), IEEE, 1 November 2013 (2013-11-01), pages 19 - 23, XP032551390, DOI: 10.1109/HMWC.2013.6710305
- NORIFUMI KAMIYA ET AL: "Pilot-Symbol Assisted and Code-Aided Phase Error Estimation for High-Order QAM Transmission", IEEE TRANSACTIONS ON COMMUNICATIONS., vol. 61, no. 10, 1 October 2013 (2013-10-01), PISCATAWAY, NJ. USA., pages 4369 - 4380, XP055230088, ISSN: 0090-6778, DOI: 10.1109/TCOMM.2013.090213.120763

## Description

### REFERENCE TO RELATED APPLICATIONS

This application claims the benefit of Patent Cooperation Treaty Application No. PCT/CN2016/098912 filed September 13, 2016, entitled "PHASE NOISE COMPENSATION FOR SC-FDMA WAVEFORM" and U.S. Provisional Application No. 62/360,043 filed July 8, 2016, entitled "TIME DOMAIN REFERENCE SIGNAL OF OFDM-BASED SINGLE CARRIER WAVEFORMS FOR PHASE NOISE TRACKING AND MITIGATION IN MILLIMETER-WAVE SYSTEMS".

### FIELD

The present disclosure relates to wireless technology, and more specifically to techniques for compensating for phase noise, for example, in millimeter-wave wireless systems.

### BACKGROUND

For 5G system operating in the millimeter-wave range, the phase noise in oscillators can result from frequency synthesizers which can comprise a reference clock, VCO (Voltage Controlled Oscillator), loop filter, PLL (Phase Locked Loop), etc. In millimeter-wave communication systems, the phase noise level of these frequency synthesizers can be significantly higher than that of traditional wireless systems in the UHF and microwave bands. US2011305185 discloses a method in which a a pilot is inserted on a time axis prior to performing DFT. The pilot can be inserted locally or with a uniform interval.

### BRIEF DESCRIPTION OF THE DRAWINGS

**FIG. 1** is a block diagram illustrating an example user equipment (UE) useable in connection with various aspects described herein.
**FIG. 2** is a diagram illustrating example components of a device that can be employed in accordance with various aspects discussed herein.
**FIG. 3** is a diagram illustrating example interfaces of baseband circuitry that can be employed in accordance with various aspects discussed herein.
**FIG. 4** is a block diagram illustrating a system employable at a UE (User Equipment) that facilitates phase noise compensation, according to various aspects described herein.
**FIG. 5** is a block diagram illustrating a system employable at a BS (Base Station) that facilitates phase noise compensation, according to various aspects described herein.
**FIG. 6** is a pair of diagrams illustrating phase noise power spectral density (PSD) and its impact on constellations, in connection with various aspects discussed herein.
**FIG. 7** is a diagram illustrating a conventional time domain TRS (Tracking Reference Signal) technique for the SC-FDMA or pure SC waveforms.
**FIG. 8** is a diagram illustrating simultaneous PUCCH (Physical Uplink Control Channel) and PUSCH (Physical Uplink Shared Channel) transmission in LTE (Long Term Evolution), in connection with various aspects discussed herein.
**FIG. 9** is a diagram illustrating a first example TRS pattern employing different cyclic shifts for TRS for different users, according to various aspects discussed herein.
**FIG. 10** is a diagram illustrating a first example TRS pattern employing different frequency resources for TRS for different users, according to various aspects discussed herein.
**FIG. 11** is a pair of diagrams illustrating the PAPR (Peak-to-Average Power Ratio) CCDF (Complementary Cumulative Distribution Function) curves of different TRS sequences based on a SC (Single Carrier)-FDMA (Frequency Division Multiple Access) waveform (with TRS and PUSCH contiguous or non-contiguous), according to various aspects discussed herein.
**FIG. 12** is a diagram illustrating three example resource allocations for PDCH and TRS, according to various aspects discussed herein.
**FIG. 13** is a diagram illustrating one example of shared TRS frequency resources for two UEs, according to various aspects described herein.
**FIG. 14** is a diagram illustrating an example of TRS resource allocation in the central RBs (Resource Blocks), according to various aspects discussed herein.
**FIG. 15** is a diagram illustrating BLER (Block Error Rate) for different compensation techniques (or no compensation) in addressing phase noise compared to an ideal scenario involving no phase noise, according to various aspects discussed herein.
**FIG. 16** is a flow diagram of an example method employable at a transmitting communication device that facilitates phase noise compensation based on TRS (Tracking Reference Signals), according to various aspects discussed herein.
**FIG. 17** is a flow diagram of an example method employable at a receiving communication device that facilitates phase noise compensation based on TRS (Tracking Reference Signals), according to various aspects discussed herein.
**FIG. 18** is a pair of diagrams illustrating two phase noise processes for two distinct models, according to various aspects discussed herein.
**FIG. 19A** is a diagram illustrating generation of an OFDM-based single carrier waveform, in connection with various aspects discussed herein.
**FIG. 19B** is a diagram illustrating generation of an OFDM-based single carrier waveform comprising samples of a time trackable training sequence, in connection with various aspects discussed herein.
**FIG. 20** is a diagram illustrating a graph comparing the performance of a SC-FDMA waveform in an ideal scenario involving no phase noise to two phase noise compensation techniques according to various aspects discussed herein.
**FIG. 21** is a diagram illustrating a graph comparing the performance of a SC-FDMA waveform in an ideal scenario involving no phase noise to phase noise compensation techniques involving variations in sequence length and spacing for reference symbols, according to various aspects discussed herein.
**FIG. 22** is a flow diagram of an example method employable at a transmitting communication device that facilitates phase noise compensation based on a time-domain training sequence, according to various aspects discussed herein.
**FIG. 23** is a flow diagram of an example method employable at a receiving communication device that facilitates phase noise compensation based on a time-domain training sequence, according to various aspects discussed herein. Parts of description and drawing which are not covered by the claims are not presented as embodiments of the present application, but as examples useful for understanding the present application.

### DETAILED DESCRIPTION

The invention is as defined in the independent claims.

The present disclosure will now be described with reference to the attached drawing figures, wherein like reference numerals are used to refer to like elements throughout, and wherein the illustrated structures and devices are not necessarily drawn to scale. As utilized herein, terms "component," "system," "interface," and the like are intended to refer to a computer-related entity, hardware, software (e.g., in execution), and/or firmware. For example, a component can be a processor (e.g., a microprocessor, a controller, or other processing device), a process running on a processor, a controller, an object, an executable, a program, a storage device, a computer, a tablet PC and/or a user equipment (e.g., mobile phone, etc.) with a processing device. By way of illustration, an application running on a server and the server can also be a component. One or more components can reside within a process, and a component can be localized on one computer and/or distributed between two or more computers. A set of elements or a set of other components can be described herein, in which the term "set" can be interpreted as "one or more."

Further, these components can execute from various computer readable storage media having various data structures stored thereon such as with a module, for example. The components can communicate via local and/or remote processes such as in accordance with a signal having one or more data packets (e.g., data from one component interacting with another component in a local system, distributed system, and/or across a network, such as, the Internet, a local area network, a wide area network, or similar network with other systems via the signal).

As another example, a component can be an apparatus with specific functionality provided by mechanical parts operated by electric or electronic circuitry, in which the electric or electronic circuitry can be operated by a software application or a firmware application executed by one or more processors. The one or more processors can be internal or external to the apparatus and can execute at least a part of the software or firmware application. As yet another example, a component can be an apparatus that provides specific functionality through electronic components without mechanical parts; the electronic components can include one or more processors therein to execute software and/or firmware that confer(s), at least in part, the functionality of the electronic components.

Use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the extent that the terms "including", "includes", "having", "has", "with", or variants thereof are used in either the detailed description and the claims, such terms are intended to be inclusive in a manner similar to the term "comprising." Additionally, in situations wherein one or more numbered items are discussed (e.g., a "first X", a "second X", etc.), in general the one or more numbered items may be distinct or they may be the same, although in some situations the context may indicate that they are distinct or that they are the same.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

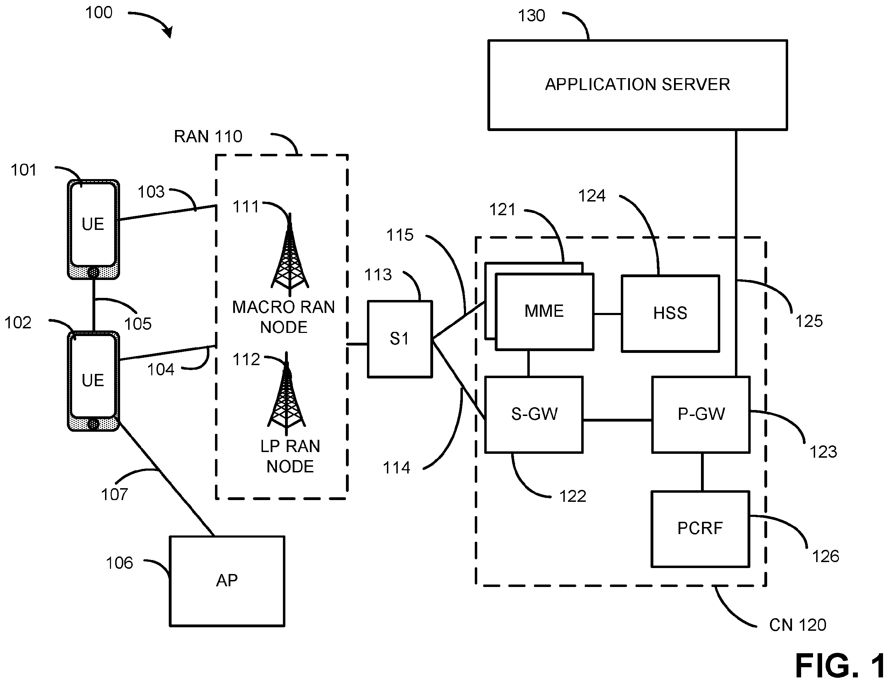

Embodiments described herein may be implemented into a system using any suitably configured hardware and/or software. **FIG. 1** illustrates an architecture of a system 100 of a network in accordance with some embodiments. The system 100 is shown to include a user equipment (UE) 101 and a UE 102. The UEs 101 and 102 are illustrated as smartphones (e.g., handheld touchscreen mobile computing devices connectable to one or more cellular networks), but may also comprise any mobile or non-mobile computing device, such as Personal Data Assistants (PDAs), pagers, laptop computers, desktop computers, wireless handsets, or any computing device including a wireless communications interface.

In some embodiments, any of the UEs 101 and 102 can comprise an Internet of Things (IoT) UE, which can comprise a network access layer designed for low-power loT applications utilizing short-lived UE connections. An loT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or loT networks. The M2M or MTC exchange of data may be a machine-initiated exchange of data. An loT network describes interconnecting loT UEs, which may include uniquely identifiable embedded computing devices (within the Internet infrastructure), with short-lived connections. The loT UEs may execute background applications (e.g., keep-alive messages, status updates, etc.) to facilitate the connections of the loT network.

The UEs 101 and 102 may be configured to connect, e.g., communicatively couple, with a radio access network (RAN) 110 - the RAN 110 may be, for example, an Evolved Universal Mobile Telecommunications System (UMTS) Terrestrial Radio Access Network (E-UTRAN), a NextGen RAN (NG RAN), or some other type of RAN. The UEs 101 and 102 utilize connections 103 and 104, respectively, each of which comprises a physical communications interface or layer (discussed in further detail below); in this example, the connections 103 and 104 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth generation (5G) protocol, a New Radio (NR) protocol, and the like.

In this embodiment, the UEs 101 and 102 may further directly exchange communication data via a ProSe interface 105. The ProSe interface 105 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 102 is shown to be configured to access an access point (AP) 106 via connection 107. The connection 107 can comprise a local wireless connection, such as a connection consistent with any IEEE 802.11 protocol, wherein the AP 106 would comprise a wireless fidelity (WiFi^{®}) router. In this example, the AP 106 is shown to be connected to the Internet without connecting to the core network of the wireless system (described in further detail below).

The RAN 110 can include one or more access nodes that enable the connections 103 and 104. These access nodes (ANs) can be referred to as base stations (BSs), NodeBs, evolved NodeBs (eNBs), next Generation NodeBs (gNB), RAN nodes, and so forth, and can comprise ground stations (e.g., terrestrial access points) or satellite stations providing coverage within a geographic area (e.g., a cell). The RAN 110 may include one or more RAN nodes for providing macrocells, e.g., macro RAN node 111, and one or more RAN nodes for providing femtocells or picocells (e.g., cells having smaller coverage areas, smaller user capacity, or higher bandwidth compared to macrocells), e.g., low power (LP) RAN node 112.

Any of the RAN nodes 111 and 112 can terminate the air interface protocol and can be the first point of contact for the UEs 101 and 102. In some embodiments, any of the RAN nodes 111 and 112 can fulfill various logical functions for the RAN 110 including, but not limited to, radio network controller (RNC) functions such as radio bearer management, uplink and downlink dynamic radio resource management and data packet scheduling, and mobility management.

In accordance with some embodiments, the UEs 101 and 102 can be configured to communicate using Orthogonal Frequency-Division Multiplexing (OFDM) communication signals with each other or with any of the RAN nodes 111 and 112 over a multicarrier communication channel in accordance various communication techniques, such as, but not limited to, an Orthogonal Frequency-Division Multiple Access (OFDMA) communication technique (e.g., for downlink communications) or a Single Carrier Frequency Division Multiple Access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, a downlink resource grid can be used for downlink transmissions from any of the RAN nodes 111 and 112 to the UEs 101 and 102, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this may represent the smallest quantity of resources that currently can be allocated. There are several different physical downlink channels that are conveyed using such resource blocks.

The physical downlink shared channel (PDSCH) may carry user data and higher-layer signaling to the UEs 101 and 102. The physical downlink control channel (PDCCH) may carry information about the transport format and resource allocations related to the PDSCH channel, among other things. It may also inform the UEs 101 and 102 about the transport format, resource allocation, and H-ARQ (Hybrid Automatic Repeat Request) information related to the uplink shared channel. Typically, downlink scheduling (assigning control and shared channel resource blocks to the UE 102 within a cell) may be performed at any of the RAN nodes 111 and 112 based on channel quality information fed back from any of the UEs 101 and 102. The downlink resource assignment information may be sent on the PDCCH used for (e.g., assigned to) each of the UEs 101 and 102.

The PDCCH may use control channel elements (CCEs) to convey the control information. Before being mapped to resource elements, the PDCCH complex-valued symbols may first be organized into quadruplets, which may then be permuted using a sub-block interleaver for rate matching. Each PDCCH may be transmitted using one or more of these CCEs, where each CCE may correspond to nine sets of four physical resource elements known as resource element groups (REGs). Four Quadrature Phase Shift Keying (QPSK) symbols may be mapped to each REG. The PDCCH can be transmitted using one or more CCEs, depending on the size of the downlink control information (DCI) and the channel condition. There can be four or more different PDCCH formats defined in LTE with different numbers of CCEs (e.g., aggregation level, L=1, 2, 4, or 8).

Some embodiments may use concepts for resource allocation for control channel information that are an extension of the above-described concepts. For example, some embodiments may utilize an enhanced physical downlink control channel (EPDCCH) that uses PDSCH resources for control information transmission. The EPDCCH may be transmitted using one or more enhanced the control channel elements (ECCEs). Similar to above, each ECCE may correspond to nine sets of four physical resource elements known as an enhanced resource element groups (EREGs). An ECCE may have other numbers of EREGs in some situations.

The RAN 110 is shown to be communicatively coupled to a core network (CN) 120 -via an S1 interface 113. In embodiments, the CN 120 may be an evolved packet core (EPC) network, a NextGen Packet Core (NPC) network, or some other type of CN. In this embodiment the S1 interface 113 is split into two parts: the S1-U interface 114, which carries traffic data between the RAN nodes 111 and 112 and the serving gateway (S-GW) 122, and the S1-mobility management entity (MME) interface 115, which is a signaling interface between the RAN nodes 111 and 112 and MMEs 121.

In this embodiment, the CN 120 comprises the MMEs 121, the S-GW 122, the Packet Data Network (PDN) Gateway (P-GW) 123, and a home subscriber server (HSS) 124. The MMEs 121 may be similar in function to the control plane of legacy Serving General Packet Radio Service (GPRS) Support Nodes (SGSN). The MMEs 121 may manage mobility aspects in access such as gateway selection and tracking area list management. The HSS 124 may comprise a database for network users, including subscription-related information to support the network entities' handling of communication sessions. The CN 120 may comprise one or several HSSs 124, depending on the number of mobile subscribers, on the capacity of the equipment, on the organization of the network, etc. For example, the HSS 124 can provide support for routing/roaming, authentication, authorization, naming/addressing resolution, location dependencies, etc.

The S-GW 122 may terminate the S1 interface 113 towards the RAN 110, and routes data packets between the RAN 110 and the CN 120. In addition, the S-GW 122 may be a local mobility anchor point for inter-RAN node handovers and also may provide an anchor for inter-3GPP mobility. Other responsibilities may include lawful intercept, charging, and some policy enforcement.

The P-GW 123 may terminate an SGi interface toward a PDN. The P-GW 123 may route data packets between the EPC network 123 and external networks such as a network including the application server 130 (alternatively referred to as application function (AF)) via an Internet Protocol (IP) interface 125. Generally, the application server 130 may be an element offering applications that use IP bearer resources with the core network (e.g., UMTS Packet Services (PS) domain, LTE PS data services, etc.). In this embodiment, the P-GW 123 is shown to be communicatively coupled to an application server 130 via an IP communications interface 125. The application server 130 can also be configured to support one or more communication services (e.g., Voice-over-Internet Protocol (VoIP) sessions, PTT sessions, group communication sessions, social networking services, etc.) for the UEs 101 and 102 via the CN 120.

The P-GW 123 may further be a node for policy enforcement and charging data collection. Policy and Charging Enforcement Function (PCRF) 126 is the policy and charging control element of the CN 120. In a non-roaming scenario, there may be a single PCRF in the Home Public Land Mobile Network (HPLMN) associated with a UE's Internet Protocol Connectivity Access Network (IP-CAN) session. In a roaming scenario with local breakout of traffic, there may be two PCRFs associated with a UE's IP-CAN session: a Home PCRF (H-PCRF) within a HPLMN and a Visited PCRF (V-PCRF) within a Visited Public Land Mobile Network (VPLMN). The PCRF 126 may be communicatively coupled to the application server 130 via the P-GW 123. The application server 130 may signal the PCRF 126 to indicate a new service flow and select the appropriate Quality of Service (QoS) and charging parameters. The PCRF 126 may provision this rule into a Policy and Charging Enforcement Function (PCEF) (not shown) with the appropriate traffic flow template (TFT) and QoS class of identifier (QCI), which commences the QoS and charging as specified by the application server 130.

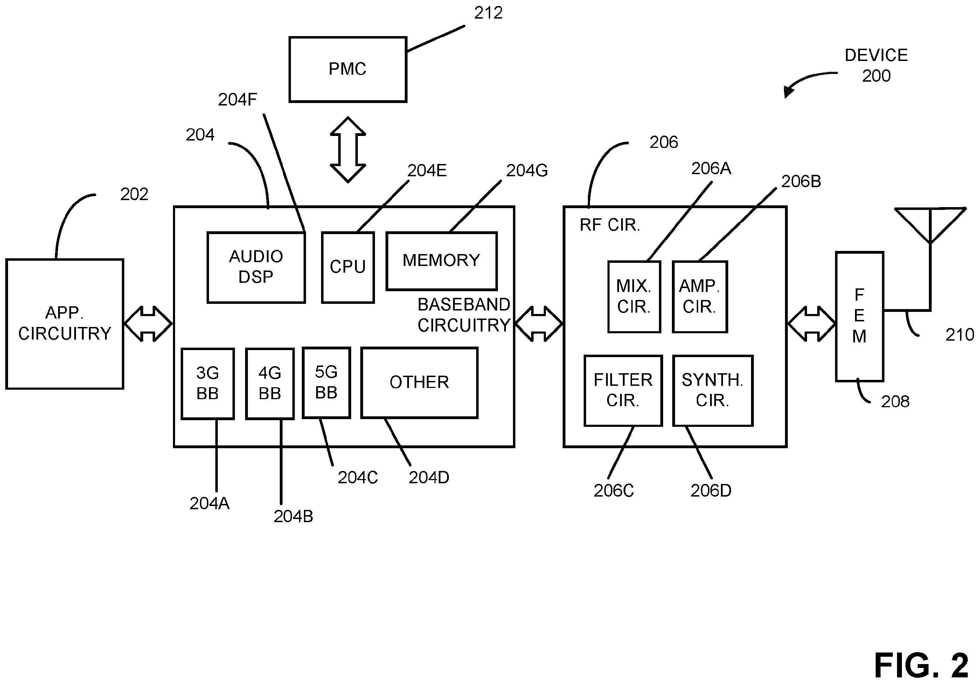

**FIG. 2** illustrates example components of a device 200 in accordance with some embodiments. In some embodiments, the device 200 may include application circuitry 202, baseband circuitry 204, Radio Frequency (RF) circuitry 206, front-end module (FEM) circuitry 208, one or more antennas 210, and power management circuitry (PMC) 212 coupled together at least as shown. The components of the illustrated device 200 may be included in a UE or a RAN node. In some embodiments, the device 200 may include less elements (e.g., a RAN node may not utilize application circuitry 202, and instead include a processor/controller to process IP data received from an EPC). In some embodiments, the device 200 may include additional elements such as, for example, memory/storage, display, camera, sensor, or input/output (I/O) interface. In other embodiments, the components described below may be included in more than one device (e.g., said circuitries may be separately included in more than one device for Cloud-RAN (C-RAN) implementations).

The application circuitry 202 may include one or more application processors. For example, the application circuitry 202 may include circuitry such as, but not limited to, one or more single-core or multi-core processors. The processor(s) may include any combination of general-purpose processors and dedicated processors (e.g., graphics processors, application processors, etc.). The processors may be coupled with or may include memory/storage and may be configured to execute instructions stored in the memory/storage to enable various applications or operating systems to run on the device 200. In some embodiments, processors of application circuitry 202 may process IP data packets received from an EPC.

The baseband circuitry 204 may include circuitry such as, but not limited to, one or more single-core or multi-core processors. The baseband circuitry 204 may include one or more baseband processors or control logic to process baseband signals received from a receive signal path of the RF circuitry 206 and to generate baseband signals for a transmit signal path of the RF circuitry 206. Baseband processing circuity 204 may interface with the application circuitry 202 for generation and processing of the baseband signals and for controlling operations of the RF circuitry 206. For example, in some embodiments, the baseband circuitry 204 may include a third generation (3G) baseband processor 204A, a fourth generation (4G) baseband processor 204B, a fifth generation (5G) baseband processor 204C, or other baseband processor(s) 204D for other existing generations, generations in development or to be developed in the future (e.g., second generation (2G), sixth generation (6G), etc.). The baseband circuitry 204 (e.g., one or more of baseband processors 204A-D) may handle various radio control functions that enable communication with one or more radio networks via the RF circuitry 206. In other embodiments, some or all of the functionality of baseband processors 204A-D may be included in modules stored in the memory 204G and executed via a Central Processing Unit (CPU) 204E. The radio control functions may include, but are not limited to, signal modulation/demodulation, encoding/decoding, radio frequency shifting, etc. In some embodiments, modulation/demodulation circuitry of the baseband circuitry 204 may include Fast-Fourier Transform (FFT), precoding, or constellation mapping/demapping functionality. In some embodiments, encoding/decoding circuitry of the baseband circuitry 204 may include convolution, tailbiting convolution, turbo, Viterbi, or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 204 may include one or more audio digital signal processor(s) (DSP) 204F. The audio DSP(s) 204F may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 204 and the application circuitry 202 may be implemented together such as, for example, on a system on a chip (SOC).

In some embodiments, the baseband circuitry 204 may provide for communication compatible with one or more radio technologies. For example, in some embodiments, the baseband circuitry 204 may support communication with an evolved universal terrestrial radio access network (EUTRAN) or other wireless metropolitan area networks (WMAN), a wireless local area network (WLAN), a wireless personal area network (WPAN). Embodiments in which the baseband circuitry 204 is configured to support radio communications of more than one wireless protocol may be referred to as multi-mode baseband circuitry.

RF circuitry 206 may enable communication with wireless networks using modulated electromagnetic radiation through a non-solid medium. In various embodiments, the RF circuitry 206 may include switches, filters, amplifiers, etc. to facilitate the communication with the wireless network. RF circuitry 206 may include a receive signal path which may include circuitry to down-convert RF signals received from the FEM circuitry 208 and provide baseband signals to the baseband circuitry 204. RF circuitry 206 may also include a transmit signal path which may include circuitry to up-convert baseband signals provided by the baseband circuitry 204 and provide RF output signals to the FEM circuitry 208 for transmission.

In some embodiments, the receive signal path of the RF circuitry 206 may include mixer circuitry 206a, amplifier circuitry 206b and filter circuitry 206c. In some embodiments, the transmit signal path of the RF circuitry 206 may include filter circuitry 206c and mixer circuitry 206a. RF circuitry 206 may also include synthesizer circuitry 206d for synthesizing a frequency for use by the mixer circuitry 206a of the receive signal path and the transmit signal path. In some embodiments, the mixer circuitry 206a of the receive signal path may be configured to down-convert RF signals received from the FEM circuitry 208 based on the synthesized frequency provided by synthesizer circuitry 206d. The amplifier circuitry 206b may be configured to amplify the down-converted signals and the filter circuitry 206c may be a low-pass filter (LPF) or bandpass filter (BPF) configured to remove unwanted signals from the down-converted signals to generate output baseband signals. Output baseband signals may be provided to the baseband circuitry 204 for further processing. In some embodiments, the output baseband signals may be zero-frequency baseband signals, although this is not a requirement. In some embodiments, mixer circuitry 206a of the receive signal path may comprise passive mixers, although the scope of the embodiments is not limited in this respect.

In some embodiments, the mixer circuitry 206a of the transmit signal path may be configured to up-convert input baseband signals based on the synthesized frequency provided by the synthesizer circuitry 206d to generate RF output signals for the FEM circuitry 208. The baseband signals may be provided by the baseband circuitry 204 and may be filtered by filter circuitry 206c.

In some embodiments, the mixer circuitry 206a of the receive signal path and the mixer circuitry 206a of the transmit signal path may include two or more mixers and may be arranged for quadrature downconversion and upconversion, respectively. In some embodiments, the mixer circuitry 206a of the receive signal path and the mixer circuitry 206a of the transmit signal path may include two or more mixers and may be arranged for image rejection (e.g., Hartley image rejection). In some embodiments, the mixer circuitry 206a of the receive signal path and the mixer circuitry 206a may be arranged for direct downconversion and direct upconversion, respectively. In some embodiments, the mixer circuitry 206a of the receive signal path and the mixer circuitry 206a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 206 may include analog-to-digital converter (ADC) and digital-to-analog converter (DAC) circuitry and the baseband circuitry 204 may include a digital baseband interface to communicate with the RF circuitry 206.

In some dual-mode embodiments, a separate radio IC circuitry may be provided for processing signals for each spectrum, although the scope of the embodiments is not limited in this respect.

In some embodiments, the synthesizer circuitry 206d may be a fractional-N synthesizer or a fractional N/N+1 synthesizer, although the scope of the embodiments is not limited in this respect as other types of frequency synthesizers may be suitable. For example, synthesizer circuitry 206d may be a delta-sigma synthesizer, a frequency multiplier, or a synthesizer comprising a phase-locked loop with a frequency divider.

The synthesizer circuitry 206d may be configured to synthesize an output frequency for use by the mixer circuitry 206a of the RF circuitry 206 based on a frequency input and a divider control input. In some embodiments, the synthesizer circuitry 206d may be a fractional N/N+1 synthesizer.

In some embodiments, frequency input may be provided by a voltage controlled oscillator (VCO), although that is not a requirement. Divider control input may be provided by either the baseband circuitry 204 or the applications processor 202 depending on the desired output frequency. In some embodiments, a divider control input (e.g., N) may be determined from a look-up table based on a channel indicated by the applications processor 202.

Synthesizer circuitry 206d of the RF circuitry 206 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 206d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 206 may include an IQ/polar converter.

FEM circuitry 208 may include a receive signal path which may include circuitry configured to operate on RF signals received from one or more antennas 210, amplify the received signals and provide the amplified versions of the received signals to the RF circuitry 206 for further processing. FEM circuitry 208 may also include a transmit signal path which may include circuitry configured to amplify signals for transmission provided by the RF circuitry 206 for transmission by one or more of the one or more antennas 210. In various embodiments, the amplification through the transmit or receive signal paths may be done solely in the RF circuitry 206, solely in the FEM 208, or in both the RF circuitry 206 and the FEM 208.

In some embodiments, the FEM circuitry 208 may include a TX/RX switch to switch between transmit mode and receive mode operation. The FEM circuitry may include a receive signal path and a transmit signal path. The receive signal path of the FEM circuitry may include an LNA to amplify received RF signals and provide the amplified received RF signals as an output (e.g., to the RF circuitry 206). The transmit signal path of the FEM circuitry 208 may include a power amplifier (PA) to amplify input RF signals (e.g., provided by RF circuitry 206), and one or more filters to generate RF signals for subsequent transmission (e.g., by one or more of the one or more antennas 210).

In some embodiments, the PMC 212 may manage power provided to the baseband circuitry 204. In particular, the PMC 212 may control power-source selection, voltage scaling, battery charging, or DC-to-DC conversion. The PMC 212 may often be included when the device 200 is capable of being powered by a battery, for example, when the device is included in a UE. The PMC 212 may increase the power conversion efficiency while providing desirable implementation size and heat dissipation characteristics.

While FIG. 2 shows the PMC 212 coupled only with the baseband circuitry 204. However, in other embodiments, the PMC 2 12 may be additionally or alternatively coupled with, and perform similar power management operations for, other components such as, but not limited to, application circuitry 202, RF circuitry 206, or FEM 208.

In some embodiments, the PMC 212 may control, or otherwise be part of, various power saving mechanisms of the device 200. For example, if the device 200 is in an RRC_Connected state, where it is still connected to the RAN node as it expects to receive traffic shortly, then it may enter a state known as Discontinuous Reception Mode (DRX) after a period of inactivity. During this state, the device 200 may power down for brief intervals of time and thus save power.

If there is no data traffic activity for an extended period of time, then the device 200 may transition off to an RRC_Idle state, where it disconnects from the network and does not perform operations such as channel quality feedback, handover, etc. The device 200 goes into a very low power state and it performs paging where again it periodically wakes up to listen to the network and then powers down again. The device 200 may not receive data in this state, in order to receive data, it must transition back to RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

Processors of the application circuitry 202 and processors of the baseband circuitry 204 may be used to execute elements of one or more instances of a protocol stack. For example, processors of the baseband circuitry 204, alone or in combination, may be used execute Layer 3, Layer 2, or Layer 1 functionality, while processors of the application circuitry 204 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

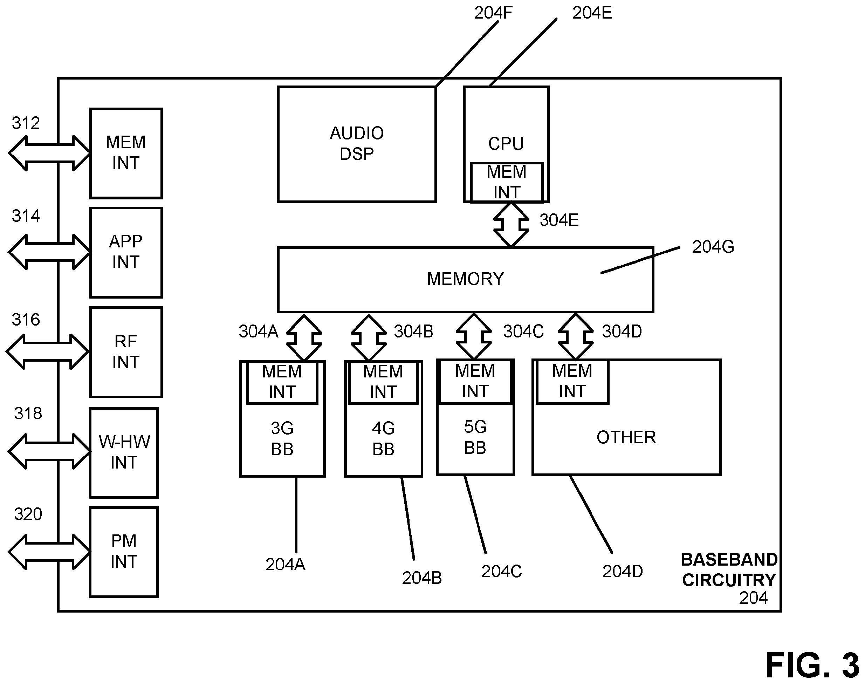

**FIG. 3** illustrates example interfaces of baseband circuitry in accordance with some embodiments. As discussed above, the baseband circuitry 204 of FIG. 2 may comprise processors 204A-204E and a memory 204G utilized by said processors. Each of the processors 204A-204E may include a memory interface, 304A-304E, respectively, to send/receive data to/from the memory 204G.

The baseband circuitry 204 may further include one or more interfaces to communicatively couple to other circuitries/devices, such as a memory interface 312 (e.g., an interface to send/receive data to/from memory external to the baseband circuitry 204), an application circuitry interface 314 (e.g., an interface to send/receive data to/from the application circuitry 202 of FIG. 2), an RF circuitry interface 316 (e.g., an interface to send/receive data to/from RF circuitry 206 of FIG. 2), a wireless hardware connectivity interface 318 (e.g., an interface to send/receive data to/from Near Field Communication (NFC) components, Bluetooth^{®} components (e.g., Bluetooth^{®} Low Energy), Wi-Fi^{®} components, and other communication components), and a power management interface 320 (e.g., an interface to send/receive power or control signals to/from the PMC 212).

In various aspects, techniques discussed herein can be employed to facilitate phase noise compensation and detection at a receiving communication device (e.g., BS (a Base Station such as a eNB (evolved Node B) or gNB (next generation Node B)) or a UE (User Equipment)) in a mobile network. A transmitting device in a mobile network can employ one of a first set of techniques discussed herein (e.g., FDM (Frequency Division Multiplexing) based techniques employing TRS (Tracking Reference Signals)) or a second set of techniques (e.g., TDM (Time Division Multiplexing) based techniques employing time-trackable sequences).

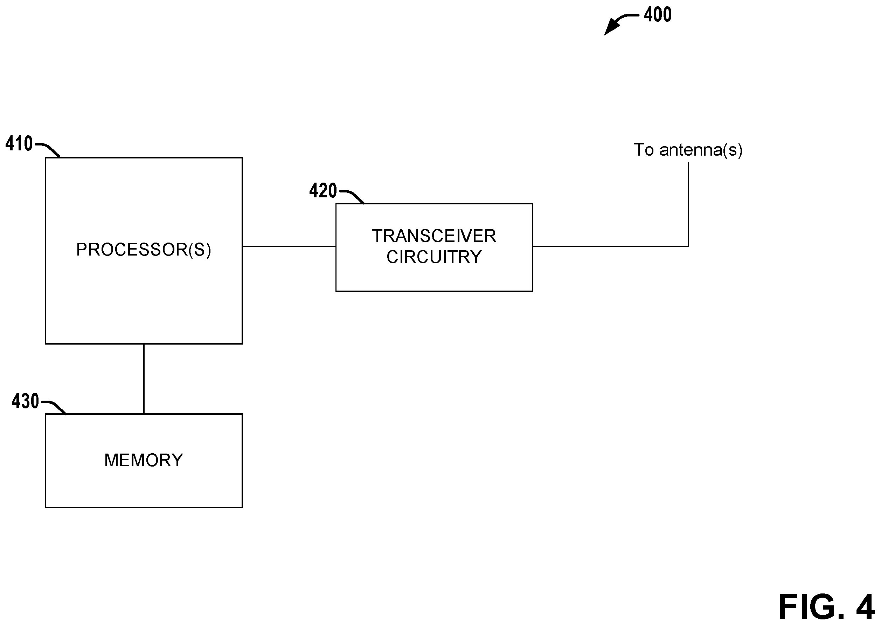

Referring to **FIG. 4****,** illustrated is a block diagram of a system 400 employable at a UE (User Equipment) that facilitates phase noise compensation, according to various aspects described herein. System 400 can include one or more processors 410 (e.g., one or more baseband processors such as one or more of the baseband processors discussed in connection with FIG. 2 and/or FIG. 3) comprising processing circuitry and associated memory interface(s) (e.g., memory interface(s) discussed in connection with FIG. 3), transceiver circuitry 420 (e.g., comprising one or more of transmitter circuitry or receiver circuitry, which can employ common circuit elements, distinct circuit elements, or a combination thereof), and a memory 430 (which can comprise any of a variety of storage mediums and can store instructions and/or data associated with one or more of processor(s) 410 or transceiver circuitry 420). In various aspects, system 400 can be included within a user equipment (UE). As described in greater detail below, system 400 can facilitate phase compensation based on generation or reception of TRS or a time-trackable sequence.

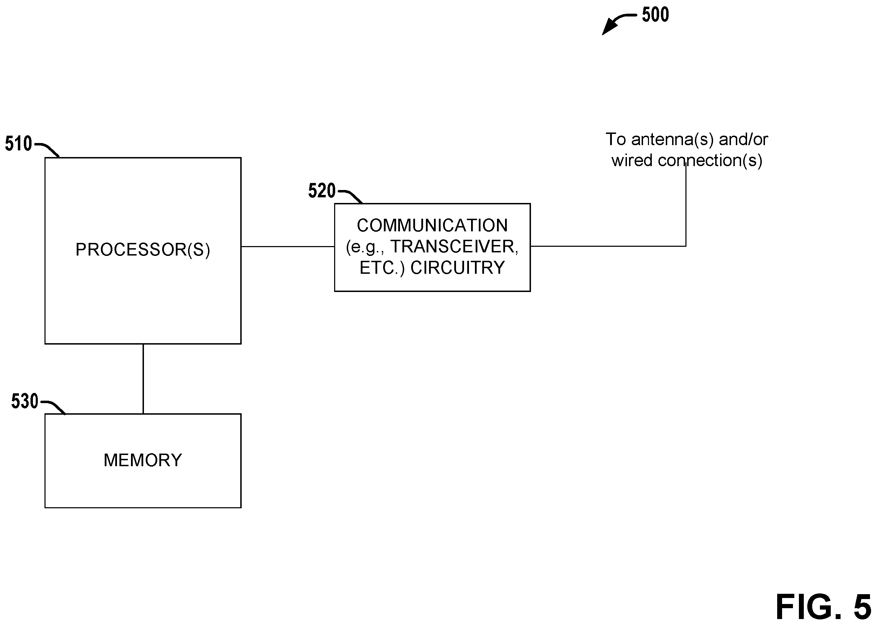

Referring to **FIG. 5****,** illustrated is a block diagram of a system 500 employable at a BS (Base Station) that facilitates phase noise compensation, according to various aspects described herein. System 600 can include one or more processors 510 (e.g., one or more baseband processors such as one or more of the baseband processors discussed in connection with FIG. 2 and/or FIG. 3) comprising processing circuitry and associated memory interface(s) (e.g., memory interface(s) discussed in connection with FIG. 3), communication circuitry 520 (e.g., which can comprise circuitry for one or more wired (e.g., X2, etc.) connections and/or transceiver circuitry that can comprise one or more of transmitter circuitry (e.g., associated with one or more transmit chains) or receiver circuitry (e.g., associated with one or more receive chains), wherein the transmitter circuitry and receiver circuitry can employ common circuit elements, distinct circuit elements, or a combination thereof), and memory 530 (which can comprise any of a variety of storage mediums and can store instructions and/or data associated with one or more of processor(s) 510 or communication circuitry 520). In various aspects, system 500 can be included within an Evolved Universal Terrestrial Radio Access Network (E-UTRAN) Node B (Evolved Node B, eNodeB, or eNB), next generation Node B (gNodeB or gNB) or other base station in a wireless communications network. In some aspects, the processor(s) 510, communication circuitry 520, and the memory 530 can be included in a single device, while in other aspects, they can be included in different devices, such as part of a distributed architecture. As described in greater detail below, system 500 can facilitate phase compensation based on generation or reception of TRS or a time-trackable sequence.

In various aspects discussed herein, signals and/or messages can be generated and output for transmission, and/or transmitted messages can be received and processed. Depending on the type of signal or message generated, outputting for transmission (e.g., by processor(s) 410, processor(s) 510, etc.) can comprise one or more of the following: generating a set of associated bits that indicate the content of the signal or message, coding (e.g., which can include adding a cyclic redundancy check (CRC) and/or coding via one or more of turbo code, low density parity-check (LDPC) code, tailbiting convolution code (TBCC), etc.), scrambling (e.g., based on a scrambling seed), modulating (e.g., via one of binary phase shift keying (BPSK), quadrature phase shift keying (QPSK), or some form of quadrature amplitude modulation (QAM), etc.), and/or resource mapping (e.g., to a scheduled set of resources, to a set of time and frequency resources granted for uplink transmission, etc.). Depending on the type of received signal or message, processing (e.g., by processor(s) 410, processor(s) 510, etc.) can comprise one or more of: identifying physical resources associated with the signal/message, detecting the signal/message, resource element group deinterleaving, demodulation, descrambling, and/or decoding.

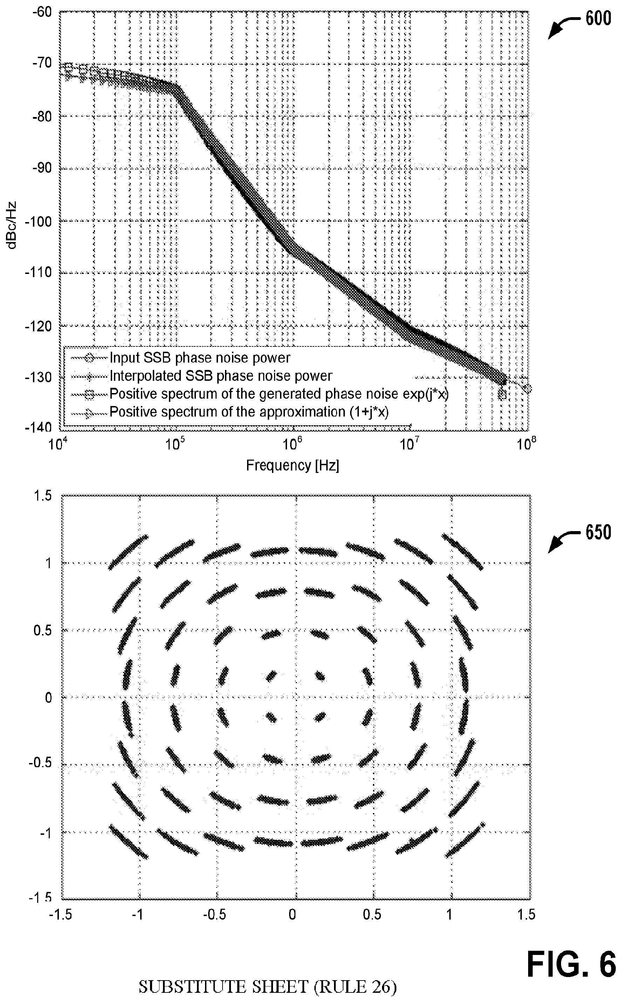

Phase noise in oscillators can have a greater impact on 5G millimeter-wave systems than conventional wireless systems. Referring to **FIG. 6****,** illustrated is a pair of diagrams showing phase noise power spectral density (PSD) at 600 and its impact on constellations at 650, in connection with various aspects discussed herein. As can be seen at 600, the phase noise can increase by approximately 20 dBc/Hz per decade of increase of the carrier frequency. The phase noise can bring in a common phase Error (CPE) in each subcarrier. In various aspects, techniques to track and compensate CPE discussed herein can be employed to reduce phase noise.

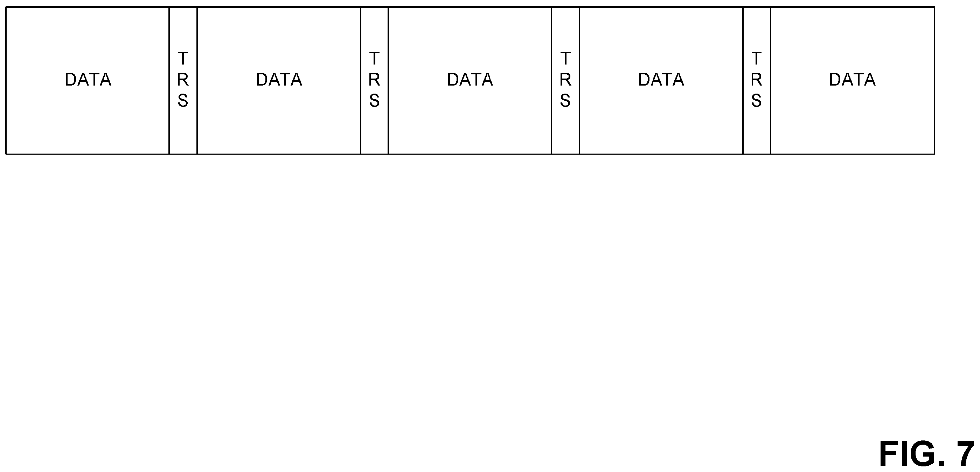

In various aspects, techniques discussed herein can facilitate phase compensation, for example, in 5G (Fifth Generation) millimeter-wave systems. In various aspects, two sets of techniques are discussed herein, either or both of which can be employed (e.g., by system 400 and/or system 500) in various aspects for phase noise compensation. The first set of techniques can relate to FDM (Frequency Division Multiplexing) based TRS techniques, and the second set of techniques can relate to TDM (Time Division Multiplexing) based TRS techniques. The first set of techniques can be employed in most scenarios. Since the phase noise impact can be more significant in scenarios with a high modulation order with high SNR (Signal-to-Noise Ratio), some CM increase from the first set of techniques is not an issue. Conventional time-domain techniques (e.g., as discussed in connection with FIG. 7, below) may not be as effective as techniques discussed herein in large delay spread scenarios or where the time domain correlation of phase noise is not high, and relies on the phase noise model.

### Phase Compensation Techniques for FDM (Frequency Division Multiplexing)

In connection with a first set of techniques, in an OFDMA (or other OFDM (Orthogonal Frequency Division Multiplexing)-based symbol) system, tracking reference signals (TRS) can be added in each symbol (e.g., by processor(s) 510 for transmission by communication circuitry 520) (or each symbol in which data (e.g., PDCH (Physical Data Channel)) is transmitted) with low density in frequency domain so that the CPE can be estimated and compensated (e.g., by processor(s) 410 based on the TRS as received via transceiver circuitry 420). In LTE (Long Term Evolution), the SC (Single Carrier)-FDMA (Frequency Division Multiple Access) waveform is utilized for uplink transmission, which, compared to OFDM, can have lower peak-to-average power ratio (PAPR). In a 5G system, the SC-FDMA waveform can also be used in various aspects. For a SC-FDMA system, it can be more difficult to add the TRS in every *N* (e.g. N=4, etc.) RBs as compared with an OFDMA system. Techniques to track and compensate the phase noise impact for systems based on the SC-FDMA waveform and/or the OFDMA waveform are discussed herein.

Referring to **FIG. 7****,** illustrated is a conventional time domain TRS technique for the SC-FDMA or pure SC waveforms. However, this technique can only work in certain cases wherein the delay speed is relatively small and the subcarrier spacing is large. In contrast, techniques discussed herein can be more robust than that illustrated in connection with FIG. 7, and can work in all scenarios.

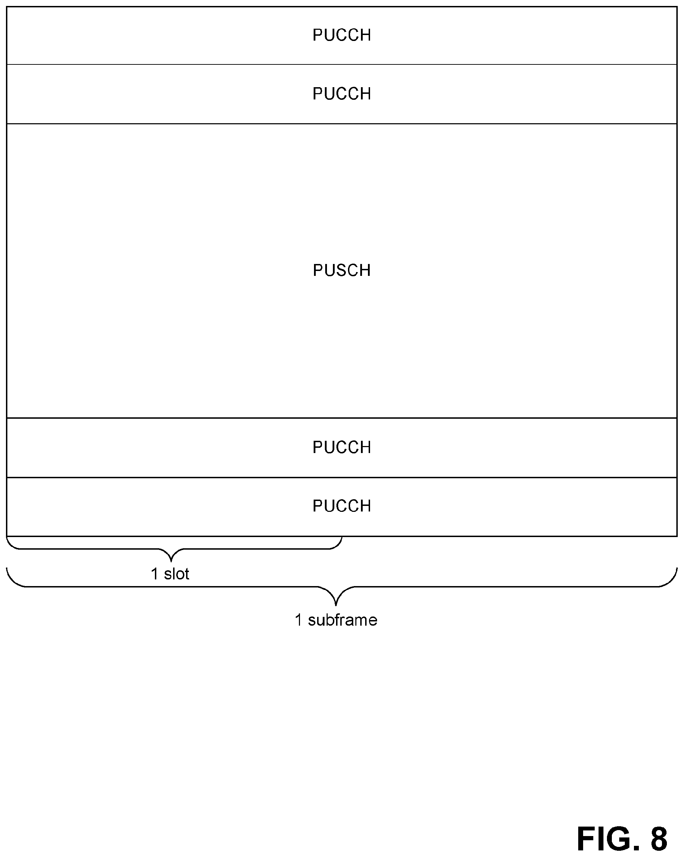

LTE adopted SC-FDMA as its uplink multiple access scheme. Since Rel-10 (LTE Release 10), simultaneous PUCCH (Physical Uplink Control Channel) and PUSCH (Physical Uplink Shared Channel) transmission can be allowed, where the PUCCH can be located in the edge RBs (Resource Blocks) and the PUSCH can be located in the central RBs. Referring to **FIG. 8****,** illustrated is a diagram showing simultaneous PUCCH and PUSCH transmission in LTE, in connection with various aspects discussed herein.

In various embodiments according to the first set of techniques, the TRS and the PDCH (Physical Data Channel) can be mapped (e.g., by processor(s) 510, for transmission by communication circuitry 520) in a manner similar to simultaneous PUCCH and PUSCH transmission in LTE, wherein the TRS can be located in the edge RB(s) and the PDCH (e.g., for DL (Downlink) and/or UL (Uplink)) can be mapped (e.g., by processor(s) 510) to the central RBs.

In various such aspects, TRS for different UEs or TRS antenna ports (APs) can be multiplexed (e.g., by processor(s) 510 for transmission by communication circuitry 520) in a frequency division multiplexing (FDM), a code division multiplexing (CDM) manner, or a combination thereof.

In various aspects of the first set of techniques, the TRS can be divided (e.g., by processor(s) 510) into several TRS groups and some UEs can be configured with the same TRS group (e.g., via configuration signaling, which can be generated by processor(s) 510, transmitted by communication circuitry 520, received via transceiver circuitry 420, and processed by processor(s) 410). Each TRS group can be mapped (e.g., by processor(s) 510 for transmission by communication circuitry 520) in a Frequency Division Multiplexing (FDM) manner. In various aspects, the TRS for one antenna port (AP) can occupy each subcarrier in one RB within one TRS group, for example, 12 REs per symbol, for example, using a Zadoff-Chu (ZC) sequence (e.g., wherein processor(s) 510 can encode each TRS with an associated ZC sequence, which can be transmitted by communication circuitry 520 and received via transceiver circuitry 510, and decoded by processor(s) 410). In various such aspects, different UEs can be distinguished by the cyclic shift of the associated ZC sequence (e.g., as configured via configuration signaling). Additionally, different RBs in the edge can belong to different TRS groups (e.g., as configured via configuration signaling). In some aspects, the number of RBs allocated for TRS transmission can be semi-statically configured by higher layers via one of a NR master information block (xMIB), NR system information block (xSIB) or radio resource control (RRC) signaling (e.g., generated by processor(s) 510, transmitted by communication circuitry 520, received via transceiver circuitry 420, and processed by processor(s) 410). In other aspects, the number of RBs for TRS transmission can be dynamically indicated in the downlink control information (DCI) (e.g., generated by processor(s) 510, transmitted by communication circuitry 520, received via transceiver circuitry 420, and processed by processor(s) 410).

In various aspects of the first set of techniques, to provide robustness on relatively large delay spread, a cyclic shift separation Δ*_{shift}* can be configured by higher layers via xMIB, xSIB or RRC signaling (e.g., generated by processor(s) 510, transmitted by communication circuitry 520, received via transceiver circuitry 420, and processed by processor(s) 410). As one example, Δ*_{shift}* = 2, which indicates 6 cyclic shift values or 6 TRS APs can be multiplexed within one RB.

In other aspects of the first set of techniques, the TRS of different Antenna Ports (APs) or UEs within one TRS group can be distinguished by different Orthogonal Cover Codes (OCCs) or subcarriers (e.g., which can be configured via configuration signaling generated by processor(s) 510, transmitted by communication circuitry 520, received via transceiver circuitry 420, and processed by processor(s) 410).

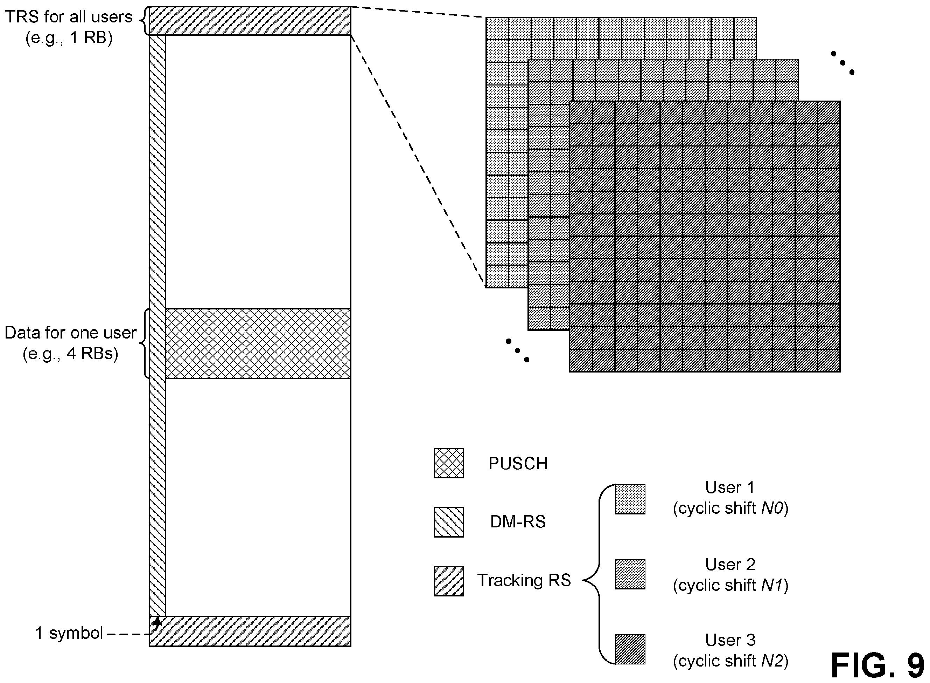

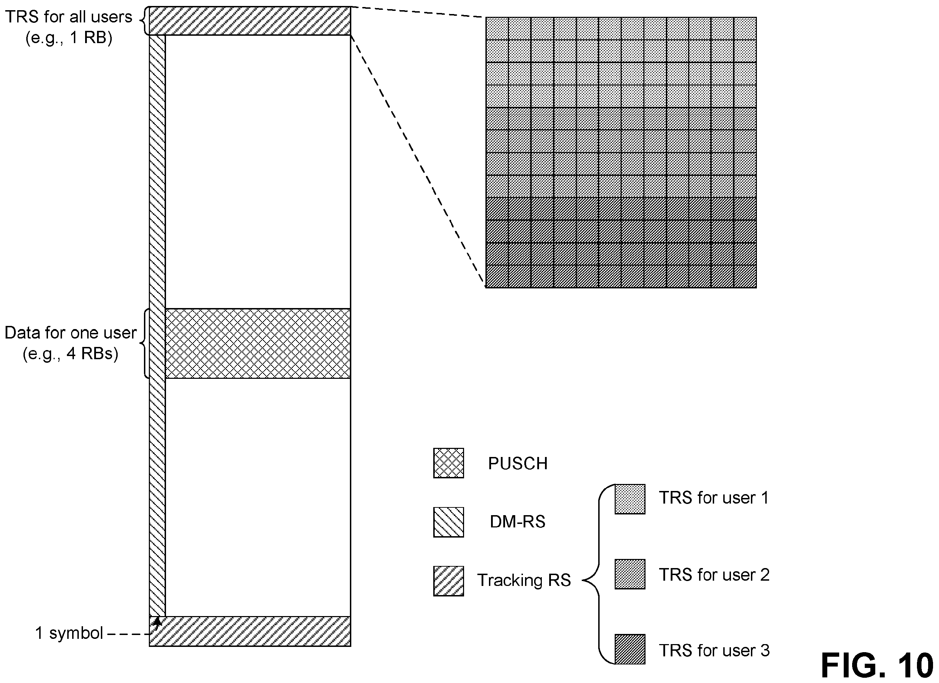

Referring to **FIG. 9****,** illustrated is a diagram of a first example TRS pattern employing different cyclic shifts for TRS for different users, according to various aspects discussed herein. Referring to **FIG. 10****,** illustrated is a diagram of a first example TRS pattern employing different frequency resources for TRS for different users, according to various aspects discussed herein. FIGS. 9 and 10 illustrate two possible examples for the TRS pattern. In a given subframe, the first and/or last few symbols may be reserved for xPDCCH (NR (New Radio) PDCCH) and/or gaps. For the remaining symbols, the TRS can be mapped (e.g., by processor(s) 510 for transmission by communication circuitry 520) to the RBs at the edge of the bandwidth (e.g., to either side or both). Additionally, the TRS can be mapped (e.g., by processor(s) 510 for transmission by communication circuitry 520) to each symbol in the subcarriers of those RBs. In FIG. 9, each TRS group contains 1 RB per symbol. Different UEs can be distinguished by the cyclic shift of the ZC sequence. In FIG. 10, each TRS group contains 4 REs per symbol. If 2 RBs are used for TRS, there can be up to 24 UEs co-scheduled in one subframe for both patterns if ZC sequence cyclic shift or OCC-4 for TRS is enabled. In another example, OCC-4 need not be applied, and in such scenarios, a total of 6 UEs can be co-scheduled.

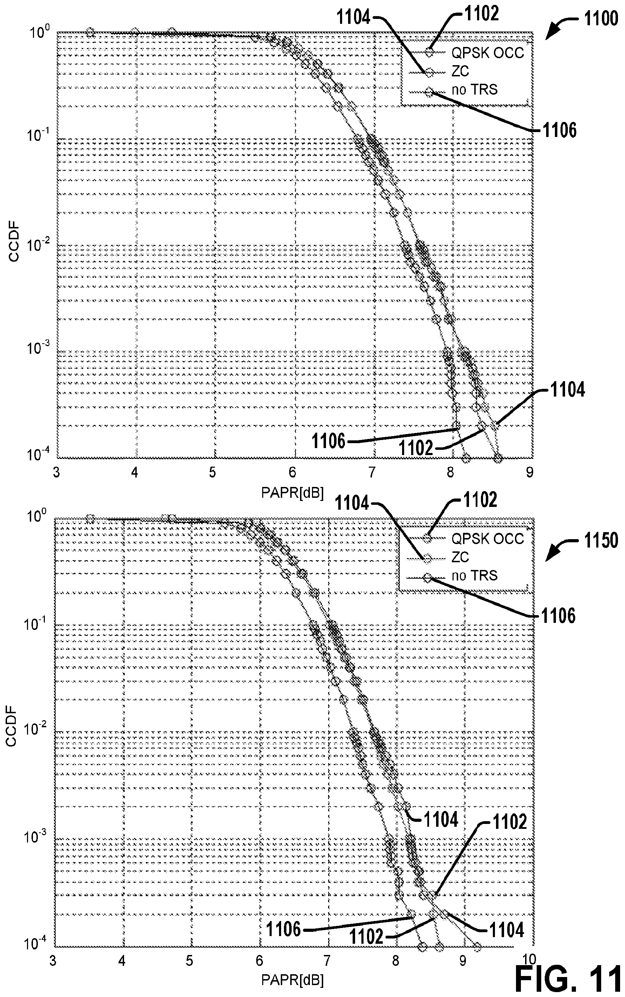

Referring to **FIG. 11****,** illustrated is a pair of diagrams 1100 and 1150 that show the PAPR (Peak-to-Average Power Ratio) CCDF (Complementary Cumulative Distribution Function) curves of different TRS sequences (1102-1106) based on a SC-FDMA waveform (with TRS and PUSCH contiguous at 1100 or non-contiguous at 1150), according to various aspects discussed herein. For the graphs of FIG. 11, the bandwidth was 80MHz with a subcarrier spacing of 60kHz, comprising a total of 100 RBs. The PAPR results illustrated in FIG. 11 were collected from multiple random resource allocation for data cases. In both 1100 and 1150, the PAPR of OCC and ZC sequences are higher than the scenario with no TRS. Additionally, the ZC sequence is slightly better than the OCC method. Furthermore, the PAPR in the scenario with TRS and PUSCH contiguous is slightly better than the non- contiguous scenario.

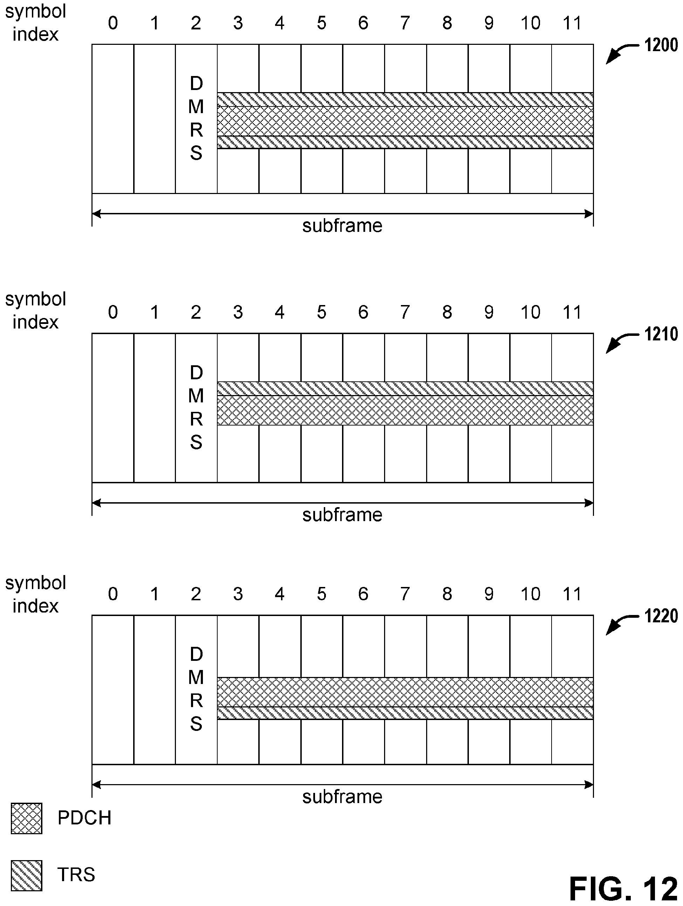

In various embodiments associated with the first set of techniques, the TRS (e.g., generated by processor(s) 510) can be transmitted (e.g., via communication circuitry 520) on the edge of resources allocated (e.g., by processor(s) 510) for a data channel (e.g., xPDCH). Referring to **FIG. 12****,** illustrated are three example resource allocations 1200-1220 for PDCH and TRS, according to various aspects discussed herein. In example resource allocation 1200, TRS (e.g., generated by processor(s) 510) can be transmitted (e.g., via communication circuitry 520) on both edges of the resources allocated (e.g., by processor(s) 510) for PDCH. In example resource allocation 1210, TRS (e.g., generated by processor(s) 510) can be transmitted (e.g., via communication circuitry 520) on the upper edge of the resources allocated (e.g., by processor(s) 510) for PDCH. In example resource allocation 1220, TRS (e.g., generated by processor(s) 510) can be transmitted (e.g., via communication circuitry 520) on the lower edge of the resources allocated (e.g., by processor(s) 510) for PDCH.

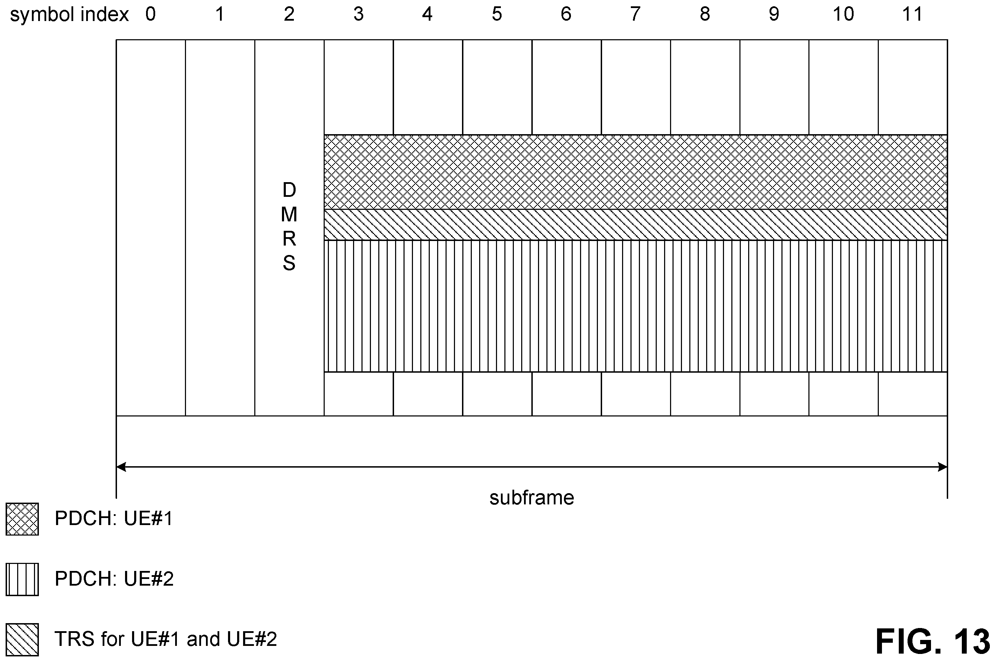

In scenarios wherein resource allocation of the PDCH transmission for multiple UEs are multiplexed (e.g., by processor(s) 510 for transmission by communication circuitry 520) in a FDM manner and are contiguous (to PDCH), TRS for multiple UEs can be located in the same resources (e.g., as scheduled by processor(s) 510 and transmitted by communication circuitry 520) and multiplexed (e.g., by processor(s) 510) in a FDM manner, a CDM manner or a combination thereof (e.g., similar to that described above in connection with FIGS. 9 and 10). Referring to **FIG. 13****,** illustrated is one example of shared TRS frequency resources for two UEs, according to various aspects described herein. In scenarios when 12 REs are used for TRS transmission (e.g., by communication circuitry 520 of TRS generated by processor(s) 510), different cyclic shift values can be used for TRS APs for two UEs (e.g., wherein processor(s) 510 can encode each TRS with an associated ZC sequence having an associated cyclic shift, which can be transmitted by communication circuitry 520 and received via transceiver circuitry 510, and decoded by processor(s) 410).

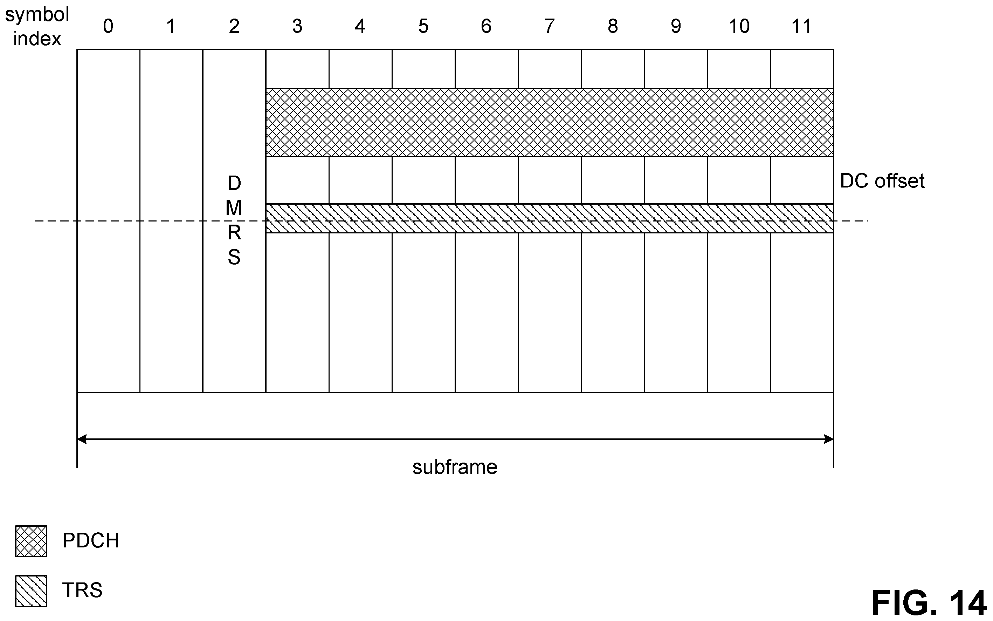

In various embodiments associated with the first set of techniques, TRS (e.g., generated by processor(s) 510) can be transmitted (e.g., via communication circuitry 520 for reception by transceiver circuitry 420) in the central N RBs. Similarly to embodiments discussed above, TRS for multiple UEs or TRS APs can be multiplexed in a FDM or CDM manner or a combination thereof (e.g., by processor(s) 510 for transmission by communication circuitry 520). Further, the number of RBs (e.g., N) can be configured by higher layers via xMIB, xSIB, or RRC signaling (e.g., generated by processor(s) 510, transmitted via communication circuitry 520, received via transceiver circuitry 420, and processed by processor(s) 410). Referring to **FIG. 14****,** illustrated is a diagram showing an example of TRS resource allocation in the central RBs, according to various aspects discussed herein.

In various embodiments associated with the first set of techniques, the TRS group index for a UE can be configured via higher layer signaling or Downlink Control Information (DCI) (e.g., generated by processor(s) 510, transmitted via communication circuitry 520, received via transceiver circuitry 420, and processed by processor(s) 410). Alternatively the TRS group index can be determined (e.g., by processor(s) 410 and processor(s) 510) by the antenna port index and the starting RB index. In various aspects, there can be a TRS group index indicator in the DCI (e.g., generated by processor(s) 510, transmitted via communication circuitry 520, received via transceiver circuitry 420, and processed by processor(s) 410) which comprises $\left⌈{log}_{2}\left({N}_{g}+1\right)\right⌉$ bits, where *N_{g}* indicates the total number of TRS groups which can be pre-defined or configured via higher layer signaling (e.g., generated by processor(s) 510, transmitted via communication circuitry 520, received via transceiver circuitry 420, and processed by processor(s) 410). In various aspects, one particular TRS group index, for example 0, can be used to indicate there is no TRS for current UE.

In various aspects, the TRS AP index for one UE within a TRS group can be configured (e.g., via higher layer signaling or DCI generated by processor(s) 510, transmitted via communication circuitry 520, received via transceiver circuitry 420, and processed by processor(s) 410) or can be determined (e.g., by processor(s) 410 and processor(s) 510) by the antenna port index and/or scramble ID.

In various embodiments associated with the first set of techniques, the TRS resource index (including allocated RB, group index, cyclic shift value, or OCC value) can be configured by higher layers via dedicated RRC signaling or dynamically indicated in the DCI format or a combination thereof (e.g., with the higher layer signaling or DCI message(s) generated by processor(s) 510, transmitted via communication circuitry 520, received via transceiver circuitry 420, and processed by processor(s) 410). Further, one or more TRS APs or TRS resource indexes can be configured for a given UE (e.g., via configuration signaling generated by processor(s) 510, transmitted via communication circuitry 520, received via transceiver circuitry 420, and processed by processor(s) 410) to further improve the phase noise compensation performance.

Similarly, in scenarios wherein a UE is equipped with multiple antenna panels, for dual beam transmission, multiple TRS resource indexes can be configured for one UE, wherein one or more resource indexes can be configured for one panel (e.g., via configuration signaling generated by processor(s) 510, transmitted via communication circuitry 520, received via transceiver circuitry 420, and processed by processor(s) 410).

In one example associated with the first set of techniques, the cyclic shift index can be based on a combination of one or more of cell specific, UE specific and AP specific parameters, wherein a cell specific cyclic shift can be determined (e.g., by processor(s) 410 and/or processor(s) 510) as a function of at least one of the following parameters: a physical cell ID, a virtual cell ID, a symbol/slot/subframe index, or a RB index. A UE specific cyclic shift value can be indicated in the DCI format (e.g., generated by processor(s) 510, transmitted via communication circuitry 520, received via transceiver circuitry 420, and processed by processor(s) 410). An AP specific cyclic shift value can be determined (e.g., by processor(s) 410 and/or processor(s) 510) as a function of a TRS AP index.

Additionally, for different OFDM symbols, the same or different cyclic shift values or OCC values can be applied (e.g., by processor(s) 510) for TRS sequence generation. In the latter case, cyclic shift or OCC hopping can be defined (e.g., and implemented by processor(s) 510 and/or processor(s) 410) to further randomize the inter-cell interference. The hopping pattern (e.g., employed by processor(s) 410 and/or processor(s) 510) can be defined as a function of at least one of the following parameters: physical cell ID, virtual cell ID, symbol/slot/subframe index, or subcarrier/sub-band/PRB index for TRS transmission.

In various aspects associated with the first set of techniques, the TRS pattern can also be extended to the OFDM waveform. Since the TRS for all UEs can be concentrated on the edge RBs, the BS (e.g., eNB, gNB, etc.) can schedule (e.g., via processor(s) 510) all of them at the same time. In another option, the TRS group can be mapped (e.g., by processor(s) 510) to some other RBs that are pre-defined or configured by higher layer signaling (e.g., generated by processor(s) 510, transmitted via communication circuitry 520, received via transceiver circuitry 420, and processed by processor(s) 410).

In various aspects associated with the first set of techniques, one or more TRS APs for PDCH transmission for one UE can be implicitly or explicitly indicated in the DCI (e.g., generated by processor(s) 510, transmitted via communication circuitry 520, received via transceiver circuitry 420, and processed by processor(s) 410). In the former case, one to one association or one or many association between TRS AP and DM-RS AP can be predefined or configured by higher layers via xMIB, xSIB or RRC signaling (e.g., generated by processor(s) 510, transmitted via communication circuitry 520, received via transceiver circuitry 420, and processed by processor(s) 410).

In aspects, a UE can determine (e.g., via processor(s) 410) characteristics of a TRS design (e.g., at least one of a presence of the set of TRS, a time density of the set of TRS, or a frequency density of the set of TRS, etc.) based at least in part on one of: higher layer signaling (e.g., generated by processor(s) 510, transmitted via communication circuitry 520, received via transceiver circuitry 420, and processed by processor(s) 410), a Modulation and Coding Scheme (MCS), an allocated bandwidth, or a subcarrier spacing.

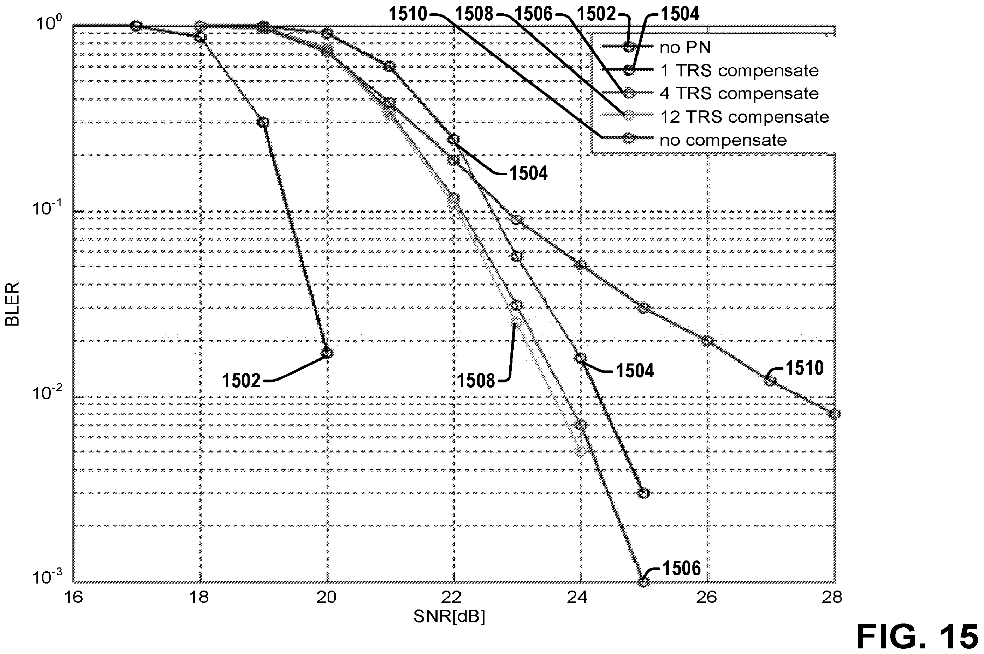

For TRS patterns as described herein, symbol level channel estimation can be employed. Referring to **FIG. 15****,** illustrated is a diagram showing BLER (Block Error Rate) for different compensation techniques (or no compensation) in addressing phase noise compared to an ideal scenario involving no phase noise, according to various aspects discussed herein. As seen in FIG. 15, the gap between performance with phase noise (PN) and without PN is about 4dB. When using TRS compensation, the performance is better than without compensation. As the SNR grows, this gap increases. In high SNR scenarios (larger than 25dB), this gap can be up to 3dB or more. Additionally, as seen in FIG. 15, PN compensation using 4 TRS per symbol for one AP provides approximately 1dB gain over using 1 TRS. Also shown in FIG. 15, employing 12 TRS can provide additional gains over the 4 TRS scenario, but of a lesser degree than the improvement of the 4 TRS scenario over the 1 TRS scenario.

In a first example scenario implementing aspects of the first set of techniques, a User Equipment (UE) can comprise circuitry to receive (e.g., transceiver circuitry 420) control signaling of Tracking Reference Signal (TRS) (e.g., generated by processor(s) 510 and transmitted via communication circuitry 520) and to determine (e.g., processor(s) 410) a resource design pattern for TRS for a single carrier frequency division multiplex access (SC-FDMA) waveform and/or a OFDM (Orthogonal Frequency Division Multiplexing) waveform.

In aspects of the first example scenario associated with the first set of techniques, the resource design pattern for TRS can be one of multiple predefined TRS design methods (e.g., predefined in a specification), which can vary, for example, in the time and/or frequency density of TRS associated with the TRS design(s). In various such aspects, the TRS can be mapped (e.g., by processor(s) 510 for transmission by communication circuitry 520) to subcarriers in the edge resource block(s) of a bandwidth. Alternatively, in various such aspects, the TRS can be mapped (e.g., by processor(s) 510 for transmission by communication circuitry 520) to consecutive subcarriers above or below subcarriers to which data is mapped. In various such aspects, the transform precoding used to generate the single carrier wave (e.g., by processor(s) 510) is not applied to the TRS. In various such aspects, the TRS can be divided into several TRS groups and two or more UEs can be configured with the same TRS group (e.g., via configuration signaling generated by processor(s) 510, transmitted via communication circuitry 520, received via transceiver circuitry 420, and processed by processor(s) 410).

In various aspects of the first example scenario associated with the first set of techniques, the number of RBs for TRS transmission can be dynamically indicated in the downlink control information (DCI) (e.g., generated by processor(s) 510, transmitted via communication circuitry 520, received via transceiver circuitry 420, and processed by processor(s) 410). In various such aspects, the TRS of different groups can be mapped (e.g., by processor(s) 510 for transmission by communication circuitry 520) in a Frequency Division Multiplexing (FDM) manner. In various such aspects, the TRS for different antenna ports (AP) within one TRS group can be distinguished by different subcarrier, orthogonal cover code or cyclic shift. In various such aspects, different sequences can be applied (e.g., by processor(s) 410) to the TRS in the same group to ensure the multiplexing of different UEs or TRS AP. In various such aspects, the TRS can be selected (e.g., by processor(s) 510) as one of the TRS sequences from a plurality of predefined sequences to generate the TRS, which can be configured in higher layer signaling or Downlink Control Information (DCI) (e.g., generated by processor(s) 510, transmitted via communication circuitry 520, received via transceiver circuitry 420, and processed by processor(s) 410).

In various aspects of the first example scenario associated with the first set of techniques, the TRS can be an indicated TRS pattern of a plurality of predefined TRS patterns, wherein the indicated TRS pattern can be configured in higher layer signaling or Downlink Control Information (DCI) (e.g., generated by processor(s) 510, transmitted via communication circuitry 520, received via transceiver circuitry 420, and processed by processor(s) 410).

In various aspects of the first example scenario associated with the first set of techniques, the TRS group index for a UE can be configured in higher layer signaling or Downlink Control Information (DCI) (e.g., generated by processor(s) 510, transmitted via communication circuitry 520, received via transceiver circuitry 420, and processed by processor(s) 410).

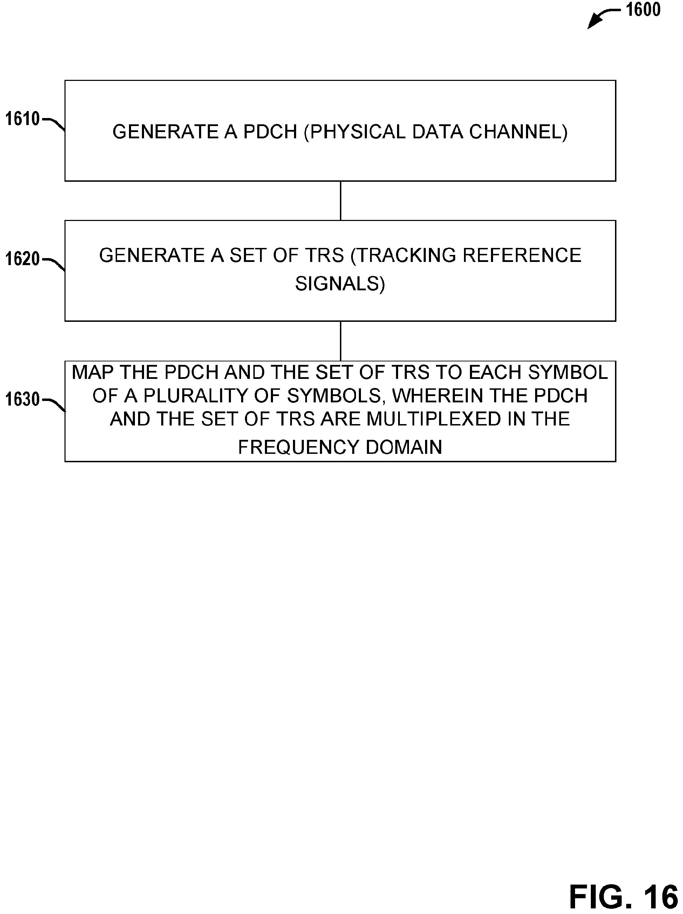

Referring to **FIG. 16****,** illustrated is a flow diagram of an example method 1600 employable at a transmitting communication device that facilitates phase noise compensation based on TRS (Tracking Reference Signals), according to various aspects discussed herein. In other aspects, a machine readable medium can store instructions associated with method 1600 that, when executed, can cause a transmitting communication device to perform the acts of method 1600.

At 1610, a PDCH can be generated.

At 1620, a set of TRS can be generated.

At 1630, the PDCH and the set of TRS can each be mapped to a plurality of symbols (e.g., of an OFDM waveform), wherein the PDCH and the set of TRS can be frequency multiplexed (e.g., with the set of TRS mapped to various RBs as discussed herein, depending on the embodiment).

Additionally or alternatively, method 1600 can include one or more other acts described herein in connection with a transmitting communication device employing system 400 or system 500 and the first set of techniques.

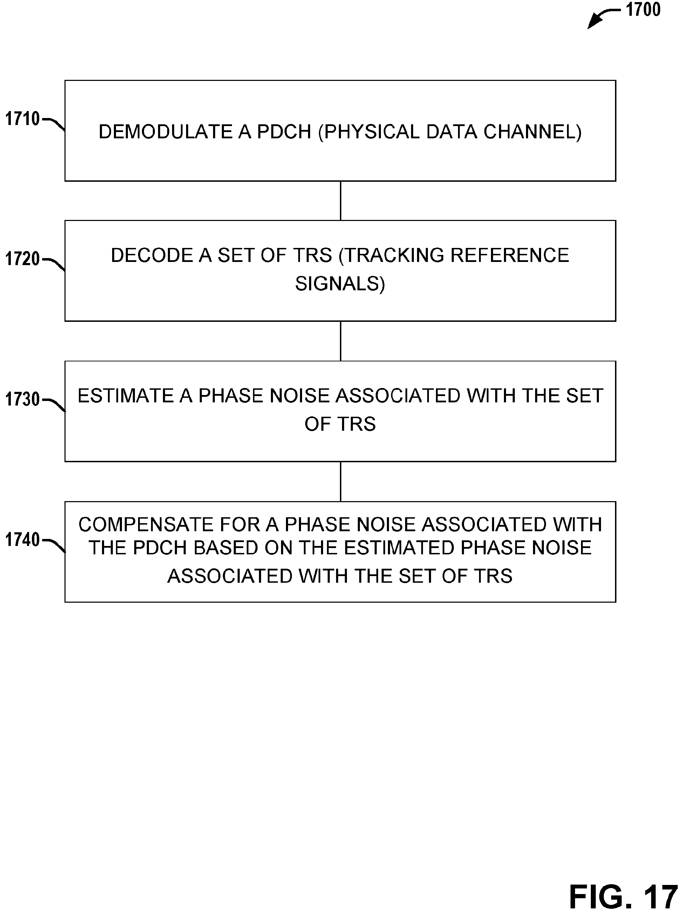

Referring to **FIG. 17****,** illustrated is a flow diagram of an example method 1700 employable at a receiving communication device that facilitates phase noise compensation based on TRS (Tracking Reference Signals), according to various aspects discussed herein. In other aspects, a machine readable medium can store instructions associated with method 1700 that, when executed, can cause a receiving communication device to perform the acts of method 1700.

At 1710, a PDCH can be demodulated.

At 1720, a set of TRS can be decoded.

At 1730, a phase noise associated with the set of TRS can be estimated.

At 1740, phase noise associated with the PDCH can be compensated for based on the estimated phase noise associated with the set of TRS.

Additionally or alternatively, method 1700 can include one or more other acts described herein in connection with a receiving communication device employing system 400 or system 500 and the first set of techniques.

### Phase Compensation Techniques for TDM (Time Division Multiplexing)

Phase noise is a fast changing random process to be tracked in the time domain, even within a symbol block or an OFDMA (Orthogonal Frequency Division Multiple Access) symbol. Traditional frequency domain pilots are not suitable for time domain tacking of phase noise. In aspects discussed herein associated with the second set of techniques, 'time-trackable' training samples (e.g., reference symbols of a time domain training sequence) can be employed (e.g., by processor(s) 510) for OFDM (Orthogonal Frequency Division Multiplexing)-based single carrier waveforms such as DFT (Discrete Fourier Transform)-s (spread)-OFDMA (also referred to as SC-FDMA), ZT (Zero-Tail)-DFT-s-OFDMA, GI (Guard Interval)-DFT-s-OFDMA, etc., to track and compensate fast changing phase noise within an OFDM symbol block time duration. Additionally, aspects of the second set of techniques can be employed to determine the density of the time tracking training samples based on some system/user parameters and capabilities.

In aspects of the second set of techniques, 'time-trackable' training sequences (e.g., time domain training sequences) can be employed (e.g., by processor(s) 510 and/or processor(s) 410) for OFDM-based single carrier waveforms such as DFT-s-OFDMA (also referred to as SC-FDMA), ZT-DFT-s-OFDMA, GI-DFT-s-OFDMA, etc., to track and compensate fast changing phase noise within an OFDM symbol block time duration. Additionally, in various aspects associated with the second set of techniques, the base station or access point of a system can allocate (e.g., via processor(s) 510) a variable number of time-trackable training symbols in each symbol/block for each UE, depending on one or more of the following associated with that UE: aa UE category, feedback, allocated bandwidth, and/or SNR regime. In addition, the position of the transmitted training samples within each symbol/block can also be configured (e.g., via configuration signaling generated by processor(s) 510, transmitted via communication circuitry 520, received via transceiver circuitry 420, and processed by processor(s) 410) for each UE based on one or more of the following for that UE: a UE category, feedback, allocated bandwidth, and/or SNR regime.

Conventional pilots for the OFDM-based single carrier waveform are defined in frequency domain. However, these frequency domain pilots are not able to track fast changing phase noise processes over the time domain. Using frequency domain pilots, only the average of a phase noise process can be estimated and compensated for. This can lead to large performance degradation for millimeter-wave networks. Aspects employing the second set of techniques discussed herein can comprise special time trackable training sequences for phase noise time tracking for OFDM-based single carrier waveforms. These techniques can provide noticeable performance improvement for millimeter-wave systems.

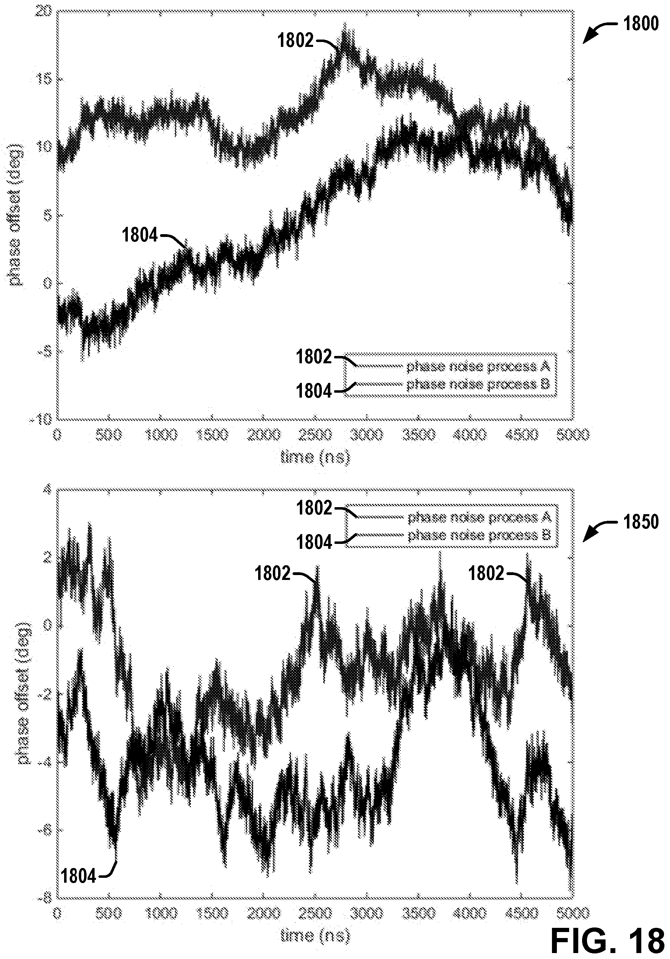

Current RFICs (Radio Frequency Integrated Circuits) for millimeter-wave systems show phase noise levels that are significantly higher than those for conventional wireless systems in the UHF (Ultra High Frequency) and microwave bands. The oscillator PSD level increases by approximately 20 dBc/Hz per decade of increase of the carrier frequency. As a result, the center frequency tolerance for current millimeter-wave standards is quite high (± 20 ppm maximum for IEEE (Institute of Electrical and Electronics Engineers) standard 802.11ad, for example) when compared to lower-frequency systems. Referring to **FIG. 18****,** illustrated is a pair of diagrams showing two phase noise processes for two distinct models 1800 and 1850, according to various aspects discussed herein. As seen in FIG. 18, in the time-domain, the phase noise is a time varying but correlated process, and the phase noise process can present noticeable variation in the reception of a symbol. The time-correlation of the phase noise among samples, as well as their variance, depends in part on the system numerology used.

Given conventional limits in constructing millimeter-wave PLL synthesizers with low-level phase noise, millimeter-wave devices can compensate by employing tracking and compensation techniques that are robust to high phase noise levels. This is true for both multi-carrier (e.g., OFDM-based) and single-carrier millimeter-wave systems. In OFDM systems (i.e., systems employing an OFDM or OFDM-based waveform) with frequency domain pilots, only the common phase error (common phase shift for all subcarriers) can be estimated and compensated for every OFDM symbol. However, single-carrier systems with time trackable training samples can potentially provide the capability to track and compensate instantaneous phase noise random process(es) within every symbol block of the single carrier waveform. Thus, in various aspects of the second set of techniques, time trackable training sequences can be employed (e.g., by processor(s) 510 and/or processor(s) 410) for OFDM-based single carrier waveforms, such as DFT-s-OFDM (or SC-FDMA), ZT-DFT-s-OFDMA, GI-DFT-s-OFDM, etc.

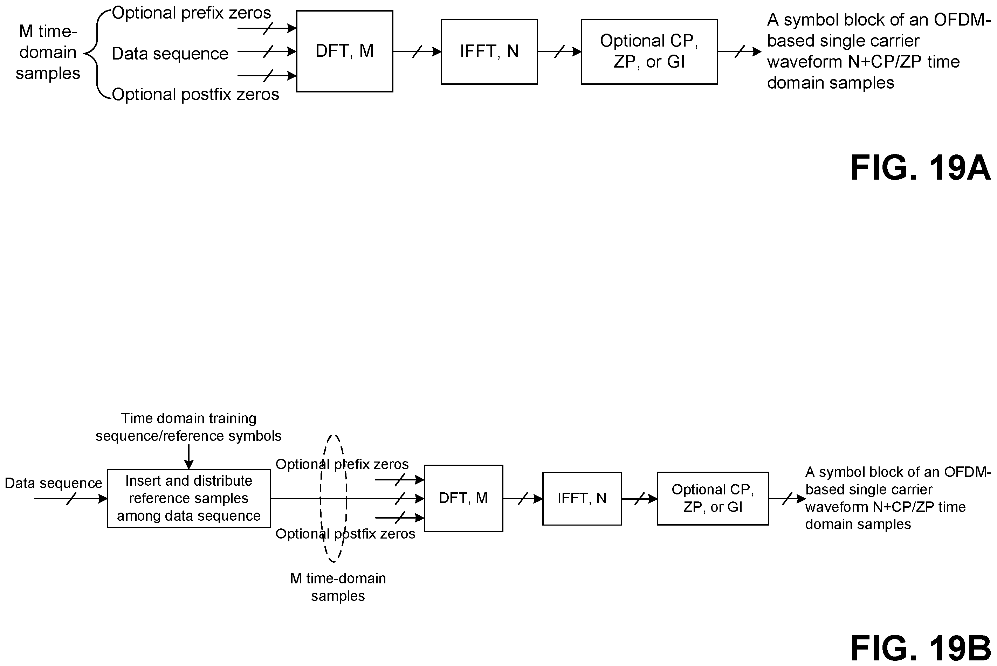

Referring to **FIG. 19A****,** illustrated is a block diagram showing generation of an OFDM-based single carrier waveform, in connection with various aspects discussed herein. As shown in FIG. 19A, optional pre- and/or post- fix zeros can be attached (e.g., by processor(s) 510 and/or processor(s) 410) to a data sequence to form a time-domain sequence of length M. A DFT spreading (e.g., by processor(s) 510 and/or processor(s) 410) of size M, which can be followed by application of an IFFT (Inverse Fast Fourier Transform) of size *N* (e.g., by processor(s) 510 and/or processor(s) 410) to form a new time domain sequence of length N. This process is equivalent to upsampling and plus pulse shaping of the original data sequence to form an OFDM-based single carrier waveform. Optionally, one or more of a cyclic prefix (CP), zero post-fix (ZP), or guard interval (GI) sequence can be attached to or inserted into (e.g., by processor(s) 510 and/or processor(s) 410) the resulted time domain block for easier mitigation of channel delay spread.

Depending on the optional choices, a specific OFDM-based (e.g., DFT-S-OFDM (SC-FDMA), ZT-DFT-s-OFDM, or GI-DFT-s-OFDM, etc.) waveform can be generated (e.g., by processor(s) 510 and/or processor(s) 410) via the process shown in FIG. 17A.

Since fast changing phase noise can lead to significant performance degradation, in various aspects of the second set of techniques, millimeter-wave systems can employ a time trackable training sequences to track and compensate for phase noise. Referring to **FIG. 19B****,** illustrated is a block diagram showing generation of an OFDM-based single carrier waveform comprising samples of a time trackable training sequence, in connection with various aspects discussed herein. As seen in FIG. 19B, samples of a time domain training sequence can be inserted (e.g., by processor(s) 510 and/or processor(s) 410) among original time domain data symbols. Reference symbols can be distributed uniformly (e.g., with equal space between adjacent reference symbols) among data symbols. The reference sequence and its configuration can be known between a transmitter and receiver (e.g., via configuration signaling generated by processor(s) 510, transmitted via communication circuitry 520, received via transceiver circuitry 420, and processed by processor(s) 410).

At the receiver (e.g., UE or BS), after channel equalization (e.g., by processor(s) 510 and/or processor(s) 410) the phase noise can be estimated and compensated for (e.g., by processor(s) 510 and/or processor(s) 410) as follows: (a) the equalized time-domain data plus reference symbols are available; (b) the phase noise can be estimated (e.g., by processor(s) 510 and/or processor(s) 410) at the reference symbols by measuring (e.g., by processor(s) 510 and/or processor(s) 410) the phase shifts; (c) as the phase noise samples are correlated (e.g., by processor(s) 510 and/or processor(s) 410), interpolation (e.g., mean estimation, MMSE (Minimum Mean-Square Error)-based interpolation, linear interpolation, etc.) can be employed (e.g., by processor(s) 510 and/or processor(s) 410) to estimate and track the phase noise process over time at the time location of data samples (statistical properties (autocorrelation or power spectral density (PSD)) of phase noise can be estimated (e.g., by processor(s) 510 and/or processor(s) 410) for MMSE interpolation of phase noise); and (d) the phase noise can be compensated for at the data symbols (e.g., by processor(s) 510 and/or processor(s) 410) using the estimated phase noise sequence.

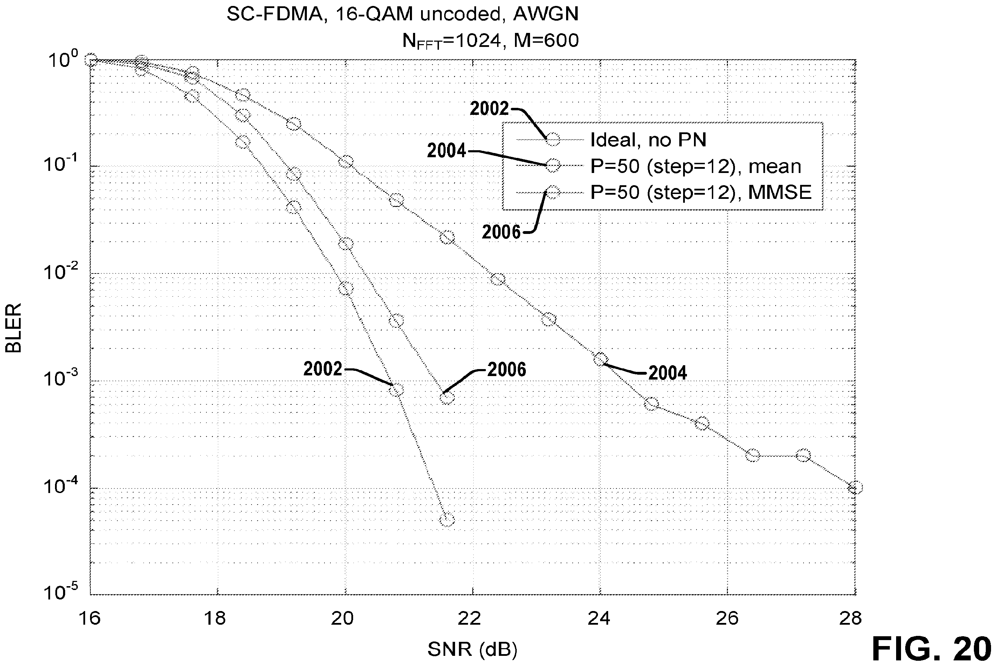

Referring to **FIG. 20****,** illustrated is a graph comparing the performance of a SC-FDMA waveform in an ideal scenario involving no phase noise to two phase noise compensation techniques according to various aspects discussed herein. In the scenario illustrated in FIG. 20, the carrier frequency was 70 GHz, the frequency spacing was 480 KHz, the FFT size (*N*) was 1024, and the number of allocated tones (*M*) was 600. The length of the time domain training sequence was *P* = 50. The training symbols were uniformly distributed among data symbols. The space between training samples was *M*/*P =* 12 samples.

Upon estimation of phase noise at the reference symbols (e.g., by processor(s) 510 and/or processor(s) 410), the phase noise sequence can be interpolated over time (e.g., by processor(s) 510 and/or processor(s) 410), for example, using a MMSE interpolator. The PSD of the phase noise can be assumed to be available at the receiver (e.g., employing system 400 or system 500). As can be seen in FIG. 18, time-domain tracking can provide improved performance over simple common phase compensation (e.g., mean compensation).

The length of the training sequence (e.g., employed by processor(s) 410 and/or processor(s) 510) can depend on the PSD and other characteristics of phase noise. In various aspects, the position of training symbols within the data symbols and also the length of the training sequence can be adaptively changed according to one or more of: a UE category, phase noise characteristics, and/or UE feedback. Adaptive change of training sequence (e.g., by processor(s) 410 and/or processor(s) 510)can help to control overhead and/or improve performance for the compensation of phase noise.

Assuming a specific phase noise, n training samples per second can be employed (e.g., by processor(s) 410 and/or processor(s) 510) to effectively estimate and compensate phase noise impact. As discussed above, n depends on phase noise characteristics such as PSD. For an OFDM-based single carrier waveform with carrier spacing Δ*f,* the duration of an OFDM block (without CP or ZP) is *T =* 1/Δ*f*, hence the number of training symbols (e.g., employed by processor(s) 410 and/or processor(s) 510) for phase noise tracking is $P = nT = \frac{n}{Δ f}$. The overhead of the training sequence is *nT*/*M,* where *M* is the allocated bandwidth (or number of tones) to a UE. If training symbols are uniformly distributed, the space between adjacent ones is *P*/*M* (or less for ZT(GI)-DFT-s-OFDM). Therefore, the overhead of a training sequence can depend on the allocated bandwidth.

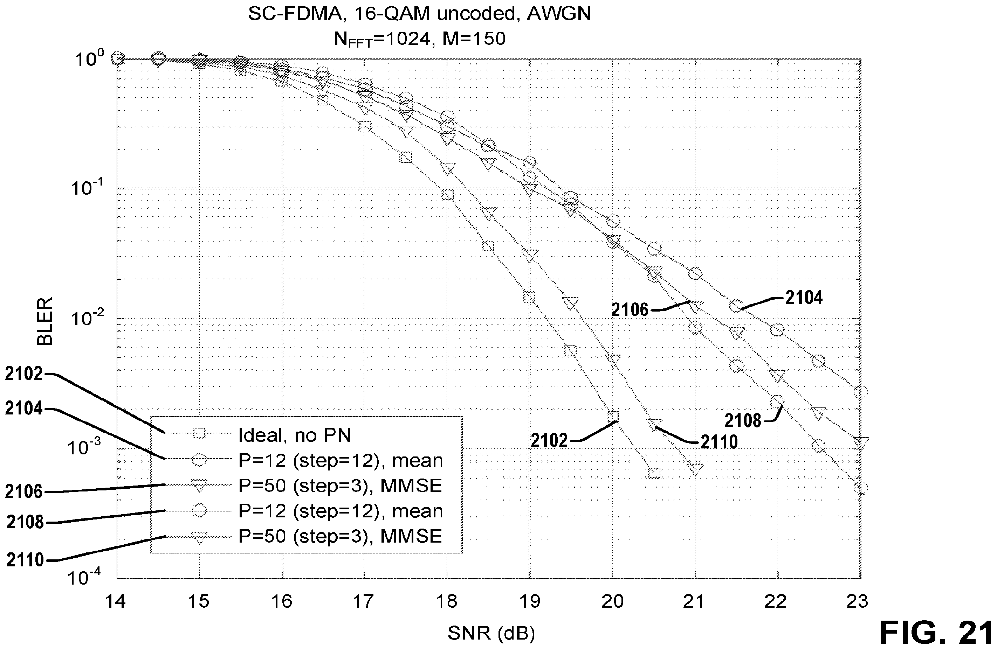

Referring to **FIG. 21****,** illustrated is a graph comparing the performance of a SC-FDMA waveform in an ideal scenario involving no phase noise to phase noise compensation techniques involving variations in sequence length and spacing for reference symbols, according to various aspects discussed herein. In the scenario of FIG. 21, the allocated bandwidth *M* is reduced from 600 (as in FIG. 20) to 150 for the SC-FDMA waveform. The four curves illustrating phase noise compensation in FIG. 19 correspond to variations in the following options: (a) same step of training sequence (step=12) but shorter length of the sequence (*P* = 12) for both mean and MMSE interpolation, and (b) same length of the training sequence (*P* = 50) but with smaller spacing for reference symbols (step=3) for both mean and MMSE interpolation. As can be seen in FIG. 19, significant performance improvement results from MMSE if the original length of the training sequence is maintained, at increased overhead for this smaller allocated bandwidth (150 vs. 600).

In addition to phase noise characteristics and UE capabilities, the length of the training sequence can vary according to the allocated MCS (Modulation and Coding Scheme) of a UE. For example, for a very low MCS level where AWGN (Additive White Gaussian Noise) noise and interference are the dominant sources of error, phase noise compensation can be limited to common phase compensation which can be estimated by phase noise averaging. In such a scenario, a wider spacing of training symbols can be enough to estimate the common phase noise and time tracking of a phase noise random sequence can be avoided.

In a first example technique, a time domain training sequence (e.g., time-trackable sequence) as described herein can be inserted (e.g., by processor(s) 410 and/or processor(s) 510) within a data sequence (e.g., generated by processor(s) 410 and/or processor(s) 510) of an OFDM-based (e.g., DFT-s-OFDM, ZT-DFT-s-OFDM, GI-DFT-s-OFDM, etc.) waveform (e.g., which can be transmitted via transceiver circuitry 420 and/or communication circuitry 520). In various such aspects, the time trackable sequence can be employed (e.g., via processor(s) 410 and/or processor(s) 510 of a receiving entity) for phase noise tracking and compensation. In various such aspects, time trackable sequence can be employed (e.g., by processor(s) 410 and/or processor(s) 510) for residual CFO (Carrier Frequency Offset) estimation and compensation. In various such aspects, symbols of the time domain training sequence can be distributed uniformly among data symbols (e.g., processor(s) 410 and/or processor(s) 510 can insert the symbols of the time domain training sequence uniformly among the data symbols). In various such aspects, symbols of the time domain training sequence can be distributed non-uniformly (e.g., or in a trunk-based pattern, etc.) among data symbols (e.g., processor(s) 410 and/or processor(s) 510 can insert the symbols of the time domain training sequence non-uniformly (e.g., or in a trunk-based pattern, etc.) among the data symbols). As discussed herein, a trunk-based pattern can be an alternating pattern of data and reference signal(s), for example, [d d d r r d d d r r d d...], where r indicates a reference signal and d indicates data. In various such aspects the pilot configuration can be used in the downlink (e.g., generated by processor(s) 510, transmitted via communication circuitry 520, received via transceiver circuitry 420, and processed by processor(s) 410) and/or uplink (e.g., generated by processor(s) 410, transmitted via transceiver circuitry 420, received via communication circuitry 520, and processed by processor(s) 510).

In various aspects of the first example scenario associated with the second set of techniques, the training sequence can be configured (e.g., by processor(s) 410 and/or 510 configuring one or more of a length, subcarrier spacing, etc.) independently for each UE according to one or more of that UE's individual phase noise level and characteristics, a symbol duration, an allocated bandwidth, and/or a modulation-coding level. In various such aspects, the training sequence configuration of each UE can be determined (e.g., by processor(s) 410 and/or 510) based at least in part on one or more of: that UE's category or feedback from that UE. In various such aspects, the configuration (e.g., as indicated via configuration signaling generated by processor(s) 510, transmitted via communication circuitry 520, received via transceiver circuitry 420, and processed by processor(s) 410) of the training sequence used for phase noise estimation for each UE can comprise one or more of: setting and/or changing the length of training sequence for that UE, setting and/or changing the position of transmitted training sequence for that UE, or setting and/or changing the number and/or position of training symbols.

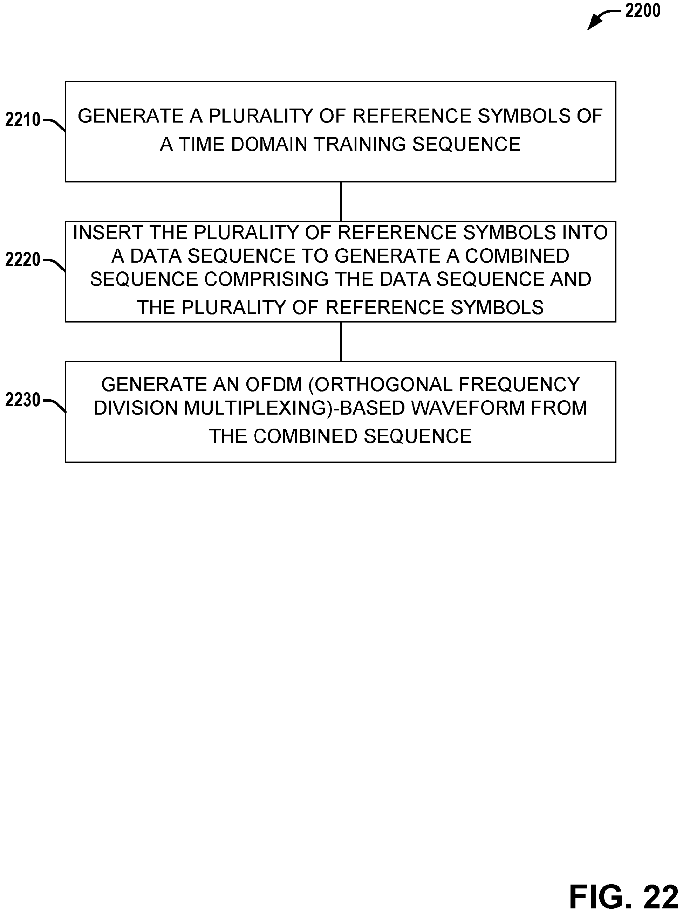

Referring to **FIG. 22****,** illustrated is a flow diagram of an example method 2200 employable at a transmitting communication device that facilitates phase noise compensation based on a time-domain training sequence, according to various aspects discussed herein. In other aspects, a machine readable medium can store instructions associated with method 2200 that, when executed, can cause a transmitting communication device to perform the acts of method 2200.

At 2210, a plurality of reference symbols of a time-domain training sequence can be generated.

At 2220, the plurality of reference symbols of the time domain training sequence can be inserted into a data sequence to generate a combined sequence comprising the data sequence and the plurality of reference symbols.

At 2230, an OFDM-based waveform can be gneated from the combined sequence.

Additionally or alternatively, method 2200 can include one or more other acts described herein in connection with a transmitting communication device employing system 400 or system 500 and the second set of techniques.

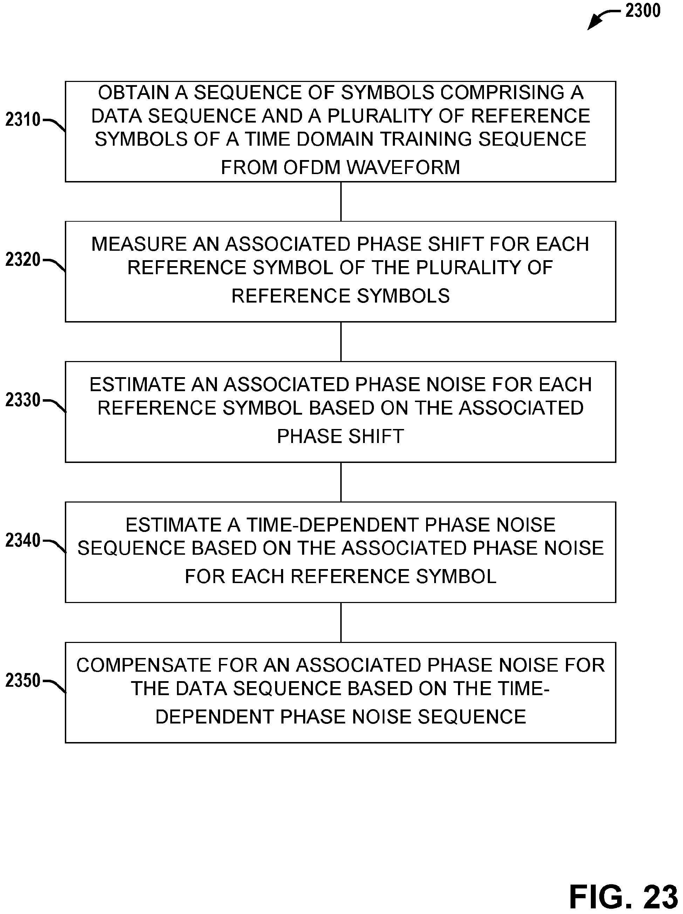

Referring to **FIG. 23****,** illustrated is a flow diagram of an example method 2300 employable at a receiving communication device that facilitates phase noise compensation based on a time-domain training sequence, according to various aspects discussed herein. In other aspects, a machine readable medium can store instructions associated with method 2300 that, when executed, can cause a receiving communication device to perform the acts of method 2300.

At 2310, an OFDM-based waveform can be demodulated to obtain a sequence of symbols comprising a data sequence and a plurality of reference symbols of a time-domain training sequence.

At 2320, an associated phase shift can be measured for each reference symbol of the plurality of reference symbols.

At 2330, an associated phase noise for each reference symbol can be estimated based on the associated phase shift(s).

At 2340, a time-dependent phase noise sequence can be estimated based on the estimated associated phase noise(s) for each reference symbol.

At 2350, an associated phase noise for the data sequence can be compensated for based on the estimated time-dependent phase noise sequence.

Additionally or alternatively, method 2300 can include one or more other acts described herein in connection with a receiving communication device employing system 400 or system 500 and the second set of techniques.

### Additional Example Embodiments

Examples herein can include subject matter such as a method, means for performing acts or blocks of the method, at least one machine-readable medium including executable instructions that, when performed by a machine (e.g., a processor with memory, an application-specific integrated circuit (ASIC), a field programmable gate array (FPGA), or the like) cause the machine to perform acts of the method or of an apparatus or system for concurrent communication using multiple communication technologies according to embodiments and examples described.

The above description of illustrated embodiments of the subject disclosure, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as those skilled in the relevant art can recognize.

In this regard, while the disclosed subject matter has been described in connection with various embodiments and corresponding Figures, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

In particular regard to the various functions performed by the above described components or structures (assemblies, devices, circuits, systems, etc.), the terms (including a reference to a "means") used to describe such components are intended to correspond, unless otherwise indicated, to any component or structure which performs the specified function of the described component (e.g., that is functionally equivalent), even though not structurally equivalent to the disclosed structure which performs the function in the herein illustrated exemplary implementations. In addition, while a particular feature may have been disclosed with respect to only one of several implementations, such feature may be combined with one or more other features of the other implementations as may be desired and advantageous for any given or particular application.

## Claims

1. An apparatus configured to be employed in a next Generation Node B, gNB, comprising:
a memory interface; and
processing circuitry configured to:
generate a configuration signaling that indicates a position of phase tracking reference signal symbols of a time domain training sequence among a data sequence or a number of the phase tracking reference signal symbols of the time domain training sequence based on a phase noise level associated with a user equipment, UE;
generate a plurality of phase tracking reference signal symbols;
based on the configuration signaling, insert the plurality of phase tracking reference signal symbols among symbols of the data sequence to generate a combined sequence comprising the data sequence and the plurality of phase tracking reference signal symbols, wherein the phase tracking reference signal symbols are distributed amongst symbols of the data sequence in the combined sequence;
performing a DFT (discrete Fourier transform) on the combined sequence to generate a symbol of a DFT-s-OFDM (Discrete Fourier Transform-Spread-Orthogonal Frequency Division Multiplexing)-based waveform.

2. The apparatus of claim 1, wherein the combined sequence comprises the plurality of phase tracking reference signal symbols uniformly distributed among the data sequence.

3. The apparatus of claim 1, wherein the combined sequence comprises the plurality of phase tracking reference signal symbols non-uniformly distributed among the data sequence or distributed in a trunk based pattern among the data sequence.

4. The apparatus of any of claims 1-3, wherein the DFT-s-OFDM-based waveform is one of a ZT-DFT-s-OFDM waveform or a GI-DFT-s-OFDM waveform.

5. The apparatus of any of claims 1-4, wherein the configuration signaling indicates a length of the phase tracking reference signal symbols.

6. The apparatus of any of claims 1-5, wherein the processing circuitry is configured to generate the configuration signaling based at least in part on one or more of a category of the UE or feedback from the UE.

7. The apparatus of any of claims 5-6, wherein the processing circuitry is further configured to generate the configuration signaling based at least in part on one or more of: phase noise characteristics associated with the UE, a symbol duration associated with the OFDM-based waveform, an allocated bandwidth, or a MCS (Modulation and Coding Scheme) associated with the UE.

8. The apparatus of any of claims 1-4, wherein the communication device is a UE (User Equipment), wherein the processing circuitry is further configured to process configuration signaling that indicates one or more parameters associated with the phase tracking reference signal symbols , wherein the configuration signaling is based at least in part on one or more of a category of the UE or feedback the processing circuitry is configured to generate, and wherein the one or more parameters comprise at least one of a length of the phase tracking reference signal symbols , a positioning of the phase tracking reference signal symbols among the data sequence, or a number of the phase tracking reference signal symbols.

9. An apparatus configured to be employed in a communication device, comprising:
a memory interface; and
processing circuitry configured to:
demodulate a symbol of a DFT-s-OFDM (Discrete Fourier Transform-Spread-Orthogonal Frequency Division Multiplexing)-based waveform to obtain a sequence of symbols comprising a data sequence and a plurality of phase tracking reference signal symbols, wherein the phase tracking reference signal symbols are distributed amongst symbols of the data sequence in the sequence of symbols;
measure an associated phase shift for each phase tracking reference signal symbol of the plurality of phase tracking reference signal symbols;
estimate an associated phase noise for each phase tracking reference signal symbol based on the associated phase shift;
estimate a time-dependent phase noise sequence based on the associated phase noise for each phase tracking reference signal symbol;
compensate for an associated phase noise for the data sequence based on the time-dependent phase noise sequence.

10. The apparatus of claim 9, wherein the processing circuitry is further configured to:
estimate a residual CFO (Carrier Frequency Offset) associated with the data sequence based on the time-dependent phase noise sequence; and
compensate for the residual CFO associated with the data sequence based on the time-dependent phase noise sequence.

11. The apparatus of any of claims 9-10, wherein the sequence of symbols comprises the plurality of phase tracking reference signal symbols distributed among the data sequence uniformly.

12. The apparatus of any of claims 9-10, wherein the sequence of symbols comprises the plurality of phase tracking reference signal symbols distributed among the data sequence non-uniformly or in a trunk-based pattern.

13. The apparatus of any of claims 9-12, wherein the DFT-s-OFDM-based waveform is a ZT-DFT-s-OFDM waveform or a GI-DFT-s-OFDM waveform.

14. The apparatus of any of claims 9-13, wherein the communication device is a gNB (next Generation Node B), wherein the phase tracking reference signal symbols are associated with a UE (User Equipment), wherein the processing circuitry is further configured to generate configuration signaling that indicates one or more parameters associated with the phase tracking reference signal symbols, and wherein the one or more parameters comprise at least one of a length of the phase tracking reference signal symbols, a positioning of the phase tracking reference signal symbols among the data sequence, or a number of the phase tracking reference signal symbols.

15. The apparatus of any of claims 9-13, wherein the communication device is a UE (User Equipment), wherein the processing circuitry is further configured to process configuration signaling that indicates one or more parameters associated with phase tracking reference signal symbols, and wherein the one or more parameters comprise at least one of a length of the phase tracking reference signal symbols, a positioning of the phase tracking reference signal symbols among the data sequence, or a number of the phase tracking reference signal symbols.

## Patentansprüche

1. Vorrichtung, die konfiguriert ist, um in einem next Generation Node B, gNB, eingesetzt zu werden, umfassend:
eine Speicherschnittstelle; und
eine Verarbeitungsschaltung, die konfiguriert ist zum:
Erzeugen einer Konfigurationssignalisierung, die eine Position von Phasenverfolgungs-Referenzsignalsymbolen einer Zeitdomänen-Trainingssequenz unter einer Datensequenz oder eine Anzahl der Phasenverfolgungs-Referenzsignalsymbole der Zeitdomänen-Trainingssequenz basierend auf einem Phasenrauschpegel, der mit einem Benutzergerät, UE, assoziiert ist, angibt;
Erzeugen einer Vielzahl von Phasenverfolgungs-Referenzsignalsymbolen;
basierend auf der Konfigurationssignalisierung, Einfügen der Vielzahl von Phasenverfolgungs-Referenzsignalsymbolen unter Symbolen der Datensequenz, um eine kombinierte Sequenz zu erzeugen, die die Datensequenz und die Vielzahl von Phasenverfolgungs-Referenzsignalsymbolen umfasst, wobei die Phasenverfolgungs-Referenzsignalsymbole unter Symbolen der Datensequenz in der kombinierten Sequenz verteilt sind;
Durchführen einer DFT (diskreten Fourier-Transformation) auf der kombinierten Sequenz, um ein Symbol einer DFT-s-OFDM (diskreten Fourier-Transformation-Spreiz-Orthogonal-Frequenzmultiplex)-basierten Wellenform zu erzeugen.

2. Die Vorrichtung nach Anspruch 1, wobei die kombinierte Sequenz die Vielzahl von Phasenverfolgungs-Referenzsignalsymbolen umfasst, die gleichmäßig unter der Datensequenz verteilt sind.

3. Die Vorrichtung nach Anspruch 1, wobei die kombinierte Sequenz die Vielzahl von Phasenverfolgungs-Referenzsignalsymbolen umfasst, die nicht gleichmäßig unter der Datensequenz verteilt sind oder in einem Trunk-basierten Muster unter der Datensequenz verteilt sind.

4. Die Vorrichtung nach einem der Ansprüche 1-3, wobei die DFT-s-OFDMbasierte Wellenform eine von einer ZT-DFT-s-OFDM-Wellenform oder einer GI-DFT-s-OFDM-Wellenform ist.

5. Die Vorrichtung nach einem der Ansprüche 1-4, wobei die Konfigurationssignalisierung eine Länge der Phasenverfolgungs-Referenzsignalsymbole angibt.

6. Die Vorrichtung nach einem der Ansprüche 1-5, wobei die Verarbeitungsschaltung konfiguriert ist, um die Konfigurationssignalisierung basierend zumindest teilweise auf einem oder mehreren von einer Kategorie des UE oder Feedback von dem UE zu erzeugen.

7. Die Vorrichtung nach einem der Ansprüche 5-6, wobei die Verarbeitungsschaltung ferner konfiguriert ist, um die Konfigurationssignalisierung basierend zumindest teilweise auf einem oder mehreren von Folgendem zu erzeugen: Phasenrauscheigenschaften, die mit dem UE assoziiert sind, eine Symboldauer, die mit der OFDM-basierten Wellenform assoziiert ist, eine zugewiesene Bandbreite oder ein MCS (Modulation and Coding Scheme), das mit dem UE assoziiert ist.

8. Die Vorrichtung nach einem der Ansprüche 1-4, wobei die Kommunikationsvorrichtung ein UE (User Equipment) ist, wobei die Verarbeitungsschaltung ferner konfiguriert ist, um eine Konfigurationssignalisierung zu verarbeiten, die einen oder mehrere Parameter angibt, die mit den Phasenverfolgungs-Referenzsignalsymbolen assoziiert sind, wobei die Konfigurationssignalisierung zumindest teilweise auf einem oder mehreren von einer Kategorie des UE oder Feedback basiert, das die Verarbeitungsschaltung zu erzeugen konfiguriert ist, und wobei der eine oder die mehreren Parameter mindestens eines von einer Länge der Phasenverfolgungs-Referenzsignalsymbole, einer Positionierung der Phasenverfolgungs-Referenzsignalsymbole unter der Datensequenz oder einer Anzahl der Phasenverfolgungs-Referenzsignalsymbole umfassen.

9. Ein Vorrichtung, die konfiguriert ist, um in einer Kommunikationsvorrichtung eingesetzt zu werden, umfassend:
eine Speicherschnittstelle; und
eine Verarbeitungsschaltung, die konfiguriert ist zum:
Demodulieren eines Symbols einer DFT-s-OFDM (diskreten Fourier-Transformation-Spreiz-Orthogonal-Frequenzmultiplex)-basierten Wellenform, um eine Sequenz von Symbolen zu erhalten, die eine Datensequenz und eine Vielzahl von Phasenverfolgungs-Referenzsignalsymbolen umfasst, wobei die Phasenverfolgungs-Referenzsignalsymbole unter Symbolen der Datensequenz in der Sequenz von Symbolen verteilt sind;
Messen einer assoziierten Phasenverschiebung für jedes Phasenverfolgungs-Referenzsignalsymbol der Vielzahl von Phasenverfolgungs-Referenzsignalsymbolen;
Schätzen eines assoziierten Phasenrauschens für jedes Phasenverfolgungs-Referenzsignalsymbol basierend auf der assoziierten Phasenverschiebung;
Schätzen einer zeitabhängigen Phasenrauschsequenz basierend auf dem assoziierten Phasenrauschen für jedes Phasenverfolgungs-Referenzsignalsymbol;
Kompensieren eines assoziierten Phasenrauschens für die Datensequenz basierend auf der zeitabhängigen Phasenrauschsequenz.

10. Die Vorrichtung nach Anspruch 9, wobei die Verarbeitungsschaltung ferner konfiguriert ist zum:
Schätzen eines Rest-CFO (Trägerfrequenzversatz), der mit der Datensequenz assoziiert ist, basierend auf der zeitabhängigen Phasenrauschsequenz; und
Kompensieren des Rest-CFO, der mit der Datensequenz assoziiert ist, basierend auf der zeitabhängigen Phasenrauschsequenz.

11. Die Vorrichtung nach einem der Ansprüche 9-10, wobei die Sequenz von Symbolen die Vielzahl von Phasenverfolgungs-Referenzsignalsymbolen umfasst, die gleichmäßig unter der Datensequenz verteilt sind.

12. Die Vorrichtung nach einem der Ansprüche 9-10, wobei die Sequenz von Symbolen die Vielzahl von Phasenverfolgungs-Referenzsignalsymbolen umfasst, die unter der Datensequenz nicht gleichmäßig oder in einem Trunk-basierten Muster verteilt sind.

13. Die Vorrichtung nach einem der Ansprüche 9-12, wobei die DFT-s-OFDMbasierte Wellenform eine ZT-DFT-s-OFDM-Wellenform oder eine GI-DFT-s-OFDM-Wellenform ist.

14. Die Vorrichtung nach einem der Ansprüche 9-13, wobei die Kommunikationsvorrichtung ein gNB (next Generation Node B) ist, wobei die Phasenverfolgungs-Referenzsignalsymbole mit einem UE (User Equipment) assoziiert sind, wobei die Verarbeitungsschaltung ferner konfiguriert ist, um eine Konfigurationssignalisierung zu erzeugen, die einen oder mehrere Parameter angibt, die mit den Phasenverfolgungs-Referenzsignalsymbolen assoziiert sind, und wobei der eine oder die mehreren Parameter mindestens eines von einer Länge der Phasenverfolgungs-Referenzsignalsymbole, einer Positionierung der Phasenverfolgungs-Referenzsignalsymbole unter der Datensequenz oder einer Anzahl der Phasenverfolgungs-Referenzsignalsymbole umfassen.

15. Die Vorrichtung nach einem der Ansprüche 9-13, wobei die Kommunikationsvorrichtung ein UE (User Equipment) ist, wobei die Verarbeitungsschaltung ferner konfiguriert ist, um eine Konfigurationssignalisierung zu verarbeiten, die einen oder mehrere Parameter angibt, die mit Phasenverfolgungs-Referenzsignalsymbolen assoziiert sind, und wobei der eine oder die mehreren Parameter mindestens eines von einer Länge der Phasenverfolgungs-Referenzsignalsymbole, einer Positionierung der Phasenverfolgungs-Referenzsignalsymbole unter der Datensequenz oder einer Anzahl der Phasenverfolgungs-Referenzsignalsymbole umfassen.

## Revendications

1. Un appareil configuré pour être employé dans un Nœud B de nouvelle génération, gNB, comprenant :
une interface mémoire ; et
une circuiterie de traitement configurée pour :
la génération d'une signalisation de configuration qui indique une position de symboles de signal de référence de suivi de phase d'une séquence d'apprentissage dans le domaine temporel parmi une séquence de données, ou un nombre de symboles de signal de référence de suivi de phase de la séquence d'apprentissage dans le domaine temporel sur la base d'un niveau de bruit de phase associé à un équipement utilisateur, UE ;
la génération d'une pluralité de symboles de signal de référence de suivi de phase ;
sur la base de la signalisation de configuration, l'insertion de la pluralité de symboles de signal de référence de suivi de phase parmi des symboles de la séquence de données pour générer une séquence combinée comprenant la séquence de données et la pluralité de symboles de signal de référence de suivi de phase, dans laquelle les symboles de signal de référence de suivi de phase sont répartis parmi des symboles de la séquence de données dans la séquence combinée ;
la réalisation d'une DFT (transformée de Fourier discrète) sur la séquence combinée pour générer un symbole d'une forme d'onde basée sur un DFT-s-OFDM (multiplexage par répartition en fréquences orthogonales à étalement de la transformée de Fourier discrète).

2. L'appareil selon la revendication 1, dans lequel la séquence combinée comprend la pluralité de symboles de signal de référence de suivi de phase uniformément répartis parmi la séquence de données.

3. L'appareil selon la revendication 1, dans lequel la séquence combinée comprend la pluralité de symboles de signal de référence de suivi de phase répartis de manière non uniforme parmi la séquence de données ou répartis dans un profil en tronc commun dans la séquence de données.

4. L'appareil selon l'une des revendications 1 à 3, dans lequel la forme d'onde basée sur un DFT-s-OFDM est une forme d'onde parmi une forme d'onde ZT-DFT-s-OFDM ou une forme d'onde GI-DFT-s-OFDM.

5. L'appareil selon l'une des revendications 1 à 4, dans lequel la signalisation de configuration indique une longueur des symboles de signal de référence de suivi de phase.

6. L'appareil selon l'une des revendications 1 à 5, dans lequel la circuiterie de traitement est configurée pour générer la signalisation de configuration sur la base au moins en partie d'une ou plusieurs d'une catégorie de l'UE ou d'un retour de l'UE.

7. L'appareil selon l'une des revendications 5 à 6, dans lequel la circuiterie de traitement est en outre configurée pour générer la signalisation de configuration sur la base au moins en partie d'une ou plusieurs parmi : des caractéristiques de bruit de phase associées à l'UE, une durée de symbole associée à la forme d'onde basée sur l'OFDM, une bande passante allouée ou un MCS (schéma de codage et de modulation) associé à l'UE.

8. L'appareil selon l'une des revendications 1 à 4, dans lequel le dispositif de communication est un UE (équipement utilisateur), dans lequel la circuiterie de traitement est en outre configurée pour traiter une signalisation de configuration qui indique un ou plusieurs paramètres associés aux symboles de signal de référence de suivi de phase, dans lequel la signalisation de configuration est basée au moins en partie sur une ou plusieurs parmi une catégorie de l'UE ou un retour que la circuiterie de traitement est configurée pour générer, et dans lequel les un ou plusieurs paramètres comprennent au moins l'un parmi une longueur des symboles de signal de référence de suivi de phase, un positionnement des symboles de signal de référence de suivi de phase parmi la séquence de données, ou un nombre des symboles de signal de référence de suivi de phase.

9. Un appareil configuré pour être employé dans un dispositif de communication, comprenant :
une interface mémoire ; et
une circuiterie de traitement configurée pour :
la démodulation d'un symbole d'une forme d'onde basée sur un DFT-s-OFDM (multiplexage par répartition en fréquences orthogonales à étalement de la transformée de Fourier discrète) pour obtenir une séquence de symboles comprenant une séquence de données et une pluralité de symboles de signal de référence de suivi de phase, dans lequel les symboles de signal de référence de suivi de phase sont répartis parmi les symboles de la séquence de données dans la séquence de symboles ;
la mesure d'un décalage de phase associé pour chaque symbole de signal de référence de suivi de phase de la pluralité de symboles de signal de référence de suivi de phase ;
l'estimation d'un bruit de phase associé pour chaque symbole de signal de référence de suivi de phase sur la base du décalage de phase associé ;
l'estimation d'une séquence de bruit de phase dépendante du temps sur la base du bruit de phase associé pour chaque symbole de signal de référence de suivi de phase ;
la compensation d'un bruit de phase associé pour la séquence de données sur la base de la séquence de bruit de phase dépendante du temps.

10. L'appareil selon la revendication 9, dans lequel la circuiterie de traitement est en outre configurée pour :
l'estimation d'un CFO (décalage de fréquence porteuse) résiduel associé à la séquence de données sur la base de la séquence de bruit de phase dépendante du temps ; et
la compensation du CFO résiduel associé à la séquence de données sur la base de la séquence de bruit de phase dépendante du temps.

11. L'appareil selon l'une des revendications 9 à 10, dans lequel la séquence de symboles comprend la pluralité de symboles de signal de référence de suivi de phase répartis uniformément parmi la séquence de données.

12. L'appareil selon l'une des revendications 9 à 10, dans lequel la séquence de symboles comprend la pluralité de symboles de signal de référence de suivi de phase répartis parmi la séquence de données de manière non uniforme ou selon un profil en tronc commun.

13. L'appareil selon l'une des revendications 9 à 12, dans lequel la forme d'onde basée sur un DFT-s-OFDM est une forme d'onde ZT-DFT-s-OFDM ou une forme d'onde GI-DFT-s-OFDM.

14. L'appareil selon l'une des revendications 9 à 13, dans lequel le dispositif de communication est un gNB (nœud B de nouvelle génération), dans lequel les symboles de signal de référence de suivi de phase sont associés à un UE (équipement utilisateur), dans lequel la circuiterie de traitement est en outre configurée pour générer une signalisation de configuration qui indique un ou plusieurs paramètres associés aux symboles de signal de référence de suivi de phase, et dans lequel les un ou plusieurs paramètres comprennent au moins l'une d'une longueur des symboles de signal de référence de suivi de phase, un positionnement des symboles de signal de référence de suivi de phase parmi la séquence de données, ou un nombre des symboles de signal de référence de suivi de phase.

15. L'appareil selon l'une des revendications 9 à 13, dans lequel le dispositif de communication est un UE (équipement utilisateur), dans lequel la circuiterie de traitement est en outre configurée pour traiter une signalisation de configuration qui indique un ou plusieurs paramètres associés à des symboles de signal de référence de suivi de phase, et dans lequel les un ou plusieurs paramètres comprennent au moins l'une d'une longueur des symboles de signal de référence de suivi de phase, un positionnement des symboles de signal de référence de suivi de phase parmi la séquence de données, ou un nombre de symboles de signal de référence de suivi de phase.
